(19) Europäisches Patentamt
European Patent Office
Office européen des brevets

(11) EP 2 778 188 A1

(12) # EUROPÄISCHE PATENTANMELDUNG

(43) Veröffentlichungstag:
**17.09.2014 Patentblatt 2014/38**

(51) Int Cl.:
***C08G 67/02*** *(2006.01)*

(21) Anmeldenummer: **14158030.8**

(22) Anmeldetag: **06.03.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **12.03.2013 EP 13158815**

(71) Anmelder: **Bayer MaterialScience AG**
**51368 Leverkusen (DE)**

(72) Erfinder:
- **MÜLLER, Thomas, Ernst**
**52062 Aachen (DE)**
- **GÜRTLER, Christoph**
**50676 Köln (DE)**
- **LEITNER, Walter**
**52074 Aachen (DE)**
- **VOGT, Henning**
**52066 Aachen (DE)**
- **SOOMRO, Saeeda**
**34128 Kassel (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(54) **Verfahren zur Herstellung von Olefin-CO-Terpolymeren**

(57) Ein Verfahren zur Herstellung von Olefin-CO-Terpolymeren, umfasst die Schritte:
- Bereitstellen eines Reaktors;
- Beaufschlagen des Reaktors mit einem ersten, gasförmigen Olefin und mit CO, so dass im Reaktor ein erster Druck p1 herrscht;
- Reaktion des ersten Olefins mit CO in Gegenwart eines Katalysators im Reaktor;

wobei ein zweites Olefin im Reaktor vorgelegt und/oder während der Reaktion zudosiert wird, vor der Reaktion im Reaktor entweder kein CO vorliegt oder das Volumenverhältnis von erstem, gasförmigen Olefin zu CO > 60:40 ist und während der Reaktion das Volumenverhältnis von zudosiertem gasförmigem Olefin zu zudosiertem CO hierbei im zeitlichen Mittel > 60:40 ist.

EP 2 778 188 A1

## Beschreibung

Die vorliegende Erfindung betrifft ein spezielles Verfahren zur Herstellung von Olefin-CO-Terpolymeren in Gegenwart eines Katalysators, dadurch gekennzeichnet, dass mindestens zwei verschiedene Olefine eingesetzt werden, von denen mindestens ein Olefin gasförmig ist, und während der Reaktion das Volumenverhältnis von gasförmigem Olefin und CO im zeitlichen Mittel größer 60:40 ist.

Gegenstand dieser Erfindung sind weiterhin Olefin-CO-Terpolymere, die nach diesem Verfahren erhalten werden, sowie deren Anwendung als Kunststoff-Additive oder -Vernetzer, in Pulverlacken, als Bindemittel bzw. nach Reduktion bzw. reduktiver Aminierung als Quervernetzer für Polyurethane.

Olefin-CO-Terpolymere (im Rahmen der Erfindung auch austauschbar als "Polyketone" bezeichnet) sind vielseitig einsetzbar, zum Beispiel als Weichmacher für PVC oder als Vernetzer. Bei letzterem reagiert die Carbonylgruppe mit CH-aciden Verbindungen in Aldolreaktionen oder mit Aminen oder Hydrazinderivaten zu Azomethinen. Zur Carbonylgruppe benachbart stehende CH-acide Gruppen können auch mit anderen Carbonylkomponenten reagieren.

Unter reduktiven Bedingungen, z.B. durch Hydrierung mit Wasserstoff an heterogenen Metallkatalysatoren, können aus den Olefin-CO-Terpolymeren Polyalkohole erhalten werden, welche ebenfalls vielfältige Anwendungen finden, z.B. ebenfalls als PVC-Weichmacher, oder als Quervernetzer für Polyurethane.

Weiterhin können durch Umsetzung mit Hydroxylamin oder Ammoniak und anschließende Reduktion, z.B. Hydrierung mit Wasserstoff an heterogenen Metallkatalysatoren, Polyamine erhalten werden, welche ihrerseits als Quervernetzer für Polyurethane dienen können.

Für alle Anwendungen ist aus verschiedenen Gründen ist eine geringe Dichte an Carbonylgruppen innerhalb der Polymerkette erforderlich. Diese Dichte lässt sich ausdrücken durch den molaren CO-Gehalt im Molekül. Bei einem CO-Gehalt von nahe 50 mol% liegt ein weitestgehend alternierendes Olefin-CO-Terpolymer vor, in dem der überwiegende Anteil an CO-Einheiten von genau einer Alkylen-Einheit getrennt sind. Für Anwendungen im Polyurethanbereich, beispielsweise als Quervernetzer nach Hydrierung zum entsprechenden Polyalkohol oder nach reduktiver Aminierung zum entsprechenden Polyamin oder Polyamin-Polyalkohol, wäre weiterhin ein zahlenmittleres Molekulargewicht $\leq$ 15 000 g/mol wünschenswert.

Alternierende Olefin-CO-Terpolymere mit einem CO-Gehalt von 50 mol% sind in EP 0 213 671 vorbeschrieben. Die beschriebenen Produkte weisen einen hohen Schmelzpunkt von 150 bis 245 °C auf. Die dadurch erforderlichen hohen Verarbeitungstemperaturen begünstigen Zersetzungserscheinungen und/oder Verfärbungen. Über das Molekulargewicht wird keine Aussage getroffen.

Bei einem hohen CO-Gehalt ist weiterhin die Wahrscheinlichkeit erhöht, dass bei hohen Temperaturen und/oder unter Chemikalieneinfluss verstärkt Aldolreaktionen auftreten, die zu einer Quervernetzung des Polymers führen. Unter Sauerstoff- und/oder UV-Einwirkung tritt bei Olefin-CO-Co- oder Terpolymeren mit hohem CO-Gehalt ein verstärkter Abbau der Polymerketten auf. Aus diesem Grund sollte der CO-Gehalt vorzugsweise unterhalb von 40 mol% liegen.

Ethylen-CO-Copolymere mit einem CO-Gehalt von 6 mol% bis 32 mol% werden in Organometallics 2009(24), 6994 beschrieben. Obwohl in Figure 3 ein Polymer mit 1 mol% CO aufgeführt wird, ist dieses weder im Text noch den Supporting Information beschrieben. Alle Copolymere mit einem CO-Gehalt $\leq$ 28 mol% weisen einen Schmelzpunkt > 115 °C auf. Für ein Ethylen-CO-Copolymer mit einem CO-Gehalt von 10 mol% wurde per GPC gegen Polystyrol-Standards ein zahlenmittleres Molekulargewicht von 4460 g/mol gemessen. Da die Turnover Number (TON) in diesem Beispiel 3270 g/mol Pd beträgt, ist davon auszugehen, dass das geringe Molekulargewicht aus der geringen TON resultiert und eine Molekulargewichtskontrolle bei höheren Umsätzen nicht möglich ist.

In Organometallics 2005(24), 2755 werden Ethylen-CO-Copolymere mit einem CO-Gehalt > 35 mol% beschrieben. Der Schmelzpunkt eines Copolymers mit 36,8 mol% CO wird mit 220 °C beschrieben. Für ein Ethylen-CO-Copolymer enthaltend 36,8 mol% CO wurde nach Fraktionierung per GPC gegen PMMA-Standards ein zahlenmittleres Molekulargewicht > 300 000 g/mol bestimmt.

In den beiden vorgenannten Publikationen werden ausschließlich Ethylen-CO-Copolymere beschrieben, die ohne Einbau eines weiteren Olefins erhalten wurden. Der Schmelzpunkt dieser Copolymere liegt generell oberhalb von 115 °C.

In Chem. Commun. 2002, 964 wird neben Ethylen-CO-Copolymeren mit einem CO-Gehalt von 40 bis 49 mol% ein Ethylen-1-Buten-CO-Terpolymer erwähnt, auf dessen CO-Gehalt und Schmelzpunkt nicht näher eingegangen wird. Da dieses Olefin-CO-Copolymer mit einem Gasgemisch hergestellt wurde, welches 30 bar Ethylen und 20 bar CO enthielt, kann jedoch ein CO-Gehalt oberhalb 40 mol% vorausgesetzt werden. Alle erhaltenen Produkte weisen Molekulargewichte > 30 000 g/mol auf.

In EP 0 632 084 werden nicht vollständig alternierende Olefin-CO-Copolymere beschrieben, die einen CO-Gehalt von 20 bis 47,5 mol% aufweisen. Als erfindungsgemäße Beispiele werden ausschließlich Ethylen-CO-Copolymere mit einem CO-Gehalt $\geq$ 42,5% aufgeführt. Die erhaltenen Copolymere weisen einen Schmelzpunkt $\geq$ 210 °C auf. Über das Molekulargewicht wird keine Aussage getroffen.

Olefin-CO-Copolymere, die durch radikalische Polymerisation erhalten wurden, sind beispielsweise in US

2495286, GB 1522942 und US 2008/0242895 u. a. beschrieben. Die erhaltenen Copolymere unterscheiden sich jedoch aufgrund eines höheren Verzweigungsgrades strukturell grundsätzlich von den in dieser Erfindung auf katalytischem Wege erhaltenen, größtenteils linearen Olefin-CO-Terpolymeren. Der Verzweigungsgrad kann beispielsweise NMR-spektroskopisch bestimmt und als durchschnittliche Anzahl verzweigender (also mindestens dreifach substituierter) C-Atome pro 1000 im Polymer enthaltener C-Atome angegeben werden. Dem Fachmann ist bekannt, dass ein erhöhter Verzweigungsgrad zu erhöhten Schmelzviskositäten führt und damit die Verarbeitung im geschmolzenen Zustand erschwert. Für die eingangs erwähnten Anwendungen wären daher Olefin-CO-Coplymere mit einem geringen Verzweigungsgrad wünschenswert.

Weiterhin erfordert der Einsatz von potenziell explosiven Radikalstartern in radikalischen Polymerisationsverfahren erhöhte Vorsichtsmaßnahmen, welche eine technische Anwendung erschweren.

Aus den oben genannten Veröffentlichungen geht hervor, dass kein katalytisches Verfahren bekannt ist, mit dem Olefin-CO-Terpolymere mit einem CO-Gehalt $\leq$ 10 mol%, einem Verzweigungsgrad < 60 Verzweigungen pro 1000 C-Atome, einem Schmelzpunkt $\leq$ 115 °C und/oder einem zahlenmittleren Molekulargewicht $\leq$ 15000 g/mol hergestellt werden können. Die vorliegende Erfindung hat sich daher die Aufgabe gestellt, ein solches Verfahren bereitzustellen.

Erfindungsgemäß gelöst wird diese Aufgabe durch ein Verfahren zur Herstellung von Olefin-CO-Terpolymeren, umfassend die Schritte:

- Bereitstellen eines Reaktors;
- Beaufschlagen des Reaktors mit einem ersten, gasförmigen Olefin und mit CO, so dass im Reaktor ein erster Druck p1 herrscht;
- Reaktion des ersten Olefins mit CO in Gegenwart eines Katalysators im Reaktor;

wobei ein zweites Olefin im Reaktor vorgelegt und/oder während der Reaktion zudosiert wird, vor der Reaktion im Reaktor entweder kein CO vorliegt oder das Volumenverhältnis von gasförmigem Olefin zu CO > 60:40 ist und während der Reaktion das Volumenverhältnis von zudosiertem gasförmigem Olefin zu zudosiertem CO im zeitlichen Mittel > 60:40 ist.

Gegenüber Ethylen-CO-Copolymeren, die unter vergleichbaren Bedingungen hergestellt wurden und einen ähnlichen CO-Gehalt aufweisen, weisen die erfindungsgemäßen Olefin-CO-Terpolymere niedrigere Schmelzpunkte, niedrigere Schmelzviskositäten sowie ein geringeres zahlenmittleres Molekulargewicht auf.

Gegenüber Olefin-CO-Terpolymeren, die durch radikalische Polymerisationsverfahren erhalten wurden, weisen die erfindungsgemäßen, nach einem katalytischen Verfahren erhaltenen Olefin-CO-Terpolymere einen geringeren Verzweigungsgrad auf.

Unter den im erfindungsgemäßen Verfahren verwendeten Reaktionsbedingungen kann das Volumenverhältnis gasförmiges Olefin:CO dem Partialdruckverhältnis gasförmiges Olefin:CO gleich gesetzt werden. Daher kann anstelle des Volumenverhältnisses in analoger Weise auch das Partialdruckverhältnis betrachtet werden. Das Volumenverhältnis von gasförmigem Olefin zu CO beträgt während der Reaktion im zeitlichen Mittel vorzugsweise > 60:40, mehr bevorzugt $\geq$ 80:20 und $\leq$ 99,9:0,1 und besonders bevorzugt $\geq$ 90:10 und $\leq$ 99:1.

Als Olefin-CO-Terpolymere im Sinne der Erfindung werden Polymere bezeichnet, die aus der Terpolymerisation von mindestens zwei Olefinen, von denen mindestens ein Olefin ein gasförmiges Olefin ist, mit Kohlenmonoxid (CO) nach dem erfindungsgemäßen Verfahren hervorgehen. Es polymerisieren das erste Olefin und das zweite Olefin miteinander, wobei zusätzlich Kohlenmonoxid als Carbonylgruppe in die Polymerkette eingebaut wird.

Die Polymerketten der erfindungsgemäßen Olefin-CO-Terpolymere enthalten mindestens einen Abschnitt $-CO-(C_2H_{4-n}R_n)_x-CO-$, wobei $x \geq 2$, $n \geq 1$ und $n \leq 4$ ist und R abhängig vom eingesetzten Olefin oder dem eingesetzten Olefin-Gemisch Wasserstoff oder einen linearen oder verzweigten, gesättigten oder ein- oder mehrfach ungesättigeten C1- bis C18-Alkyl-, Cycloalkyl-, Aryl-, Alkylaryl- oder Aralkylrest bezeichnet, der zusätzlich ein oder mehrere Heteroatome, insbesondere Sauerstoff, Stickstoff, Schwefel, Phosphor und/oder Silizium enthalten kann, und verschiedene R sich innerhalb einer Einheit $C_2H_{4-n}R_n$ und zwischen verschiedenen Einheiten $C_2H_{4-n}R_n$ unterscheiden können und/oder innerhalb einer Einheit $C_2H_{4-n}R_n$ verschiedene R so miteinander verknüpft sind, dass sie bi-, tri- oder polycylische Systeme ausbilden. Neben den Abschnitten $CO-(C_2H_{4-n}R_n)_x-CO$ kann die Polymerkette Abschnitte $CO-(C_2H_{4-n}R_n)_1-CO$ enthalten, wobei n und R den oben genannten Definitionen entsprechen. Verschiedene Abschnitte $CO-(C_2H_{4-n}R_n)_x-CO$ und/oder $CO-(C_2H_{4-n}R_n)_1-CO$ können über eine gemeinsame CO-Gruppe verknüpft sein und sich somit eine CO-Gruppe teilen.

Die erfindungsgemäßen Olefin-CO-Terpolymere enthalten mindestens zwei verschiedene Alkenyl-Einheiten $C_2H_{4-n}R_n$, wobei n und R die oben angegebene Bedeutung besitzen und sich n und/oder R zwischen den verschiedenen Alkenyl-Einheiten unterscheiden.

Neben den durch die Anwesenheit der Reste R in den Alkenyl-Einheiten $C_2H_{4-n}R_n$ bedingten Verzweigungen

der Polymerkette können in der Polymerkette zusätzliche kurzkettige Verzweigungen $-CH(CH_{3-m}R_m)-$ oder $-CR(CH_{3-m}R_m)-$ auftreten, wobei m = 0, 1 oder 2 ist und R die oben angegebene Bedeutung hat. Als Endgruppen (EG) enthalten die erfindungsgemäßen Olefin-CO-Terpolymere beispielsweise Carboxylgruppen, Formylgruppen, lineare oder verzweigte, gesättigte oder ein- oder mehrfach ungesättigte C1- bis C20-Alkyl-, Cycloalkyl-, Aryl-, Alkylaryl- oder Aralkylreste, die zusätzlich ein oder mehrere Heteroatome, insbesondere Sauerstoff, Stickstoff, Schwefel und/oder Silizium enthalten können, Estergruppen -OC(O)R' oder Ethergruppen -O-R', wobei R' für einen linearen oder verzweigten, gesättigten oder ein- oder mehrfach ungesättigten C1-bis C20-Alkyl-, Cycloalkyl, Aryl-, Alkylaryl- oder Aralkylrest steht, der zusätzlich ein oder mehrere Heteroatome, insbesondere Sauerstoff, Stickstoff, Schwefel und/oder Silizium enthalten kann, wobei diese Aufzählung nicht als umfassend zu betrachten ist. Beispiele für in den erfindungsgemäßen Olefin-CO-Terpolymeren enthaltene Endgruppen sind insbesondere Acetat $-OC(O)CH_3$, Methoxy $-OCH_3$, Methyl $-CH_3$, Ethyl $-CH_2CH_3$, Alkyl $-CH_2CH_2R$ oder $-CH(CH_3)R$, Ethylen $-CH=CH_2$, Alkylen $-CH=CH_2R$ oder $-CR=CH_2$, 1-Methylpropyl-2-en $-CH(CH_3)-CH=CH_2$, 1-Alkylpropyl-2-en $-CH(CH_2R)-CH=CH_2$, 1-Methyl-2-alkylpropyl-2-en $-CH(CH_3)-CR=CH_2$, 1-Methyl-3-alkylpropyl-2-en $-CH(CH_3)-CH=CHR$, 1-Alkyl-2-alkylpropyl-2-en $-CH(CH_2R)-CR=CH_2$, 1-Alkyl-3-alkylpropyl-2-en $-CH(CH_2R)-CH=CHR$, wobei R in allen Fällen die oben angegebene Bedeutung hat und sich innerhalb einer Endgruppe oder in verschiedenen Endgruppen unterscheiden kann, und/oder 6-Alkoxy-exo-5,6-dihydrodicyclopentadienyl, 2-Alkoxycyclooct-5-enyl, wobei die Alkoxygruppen von einem linearen oder verzweigten C1- bis C20-Alkylrest abgeleitet sind.

Hinsichtlich des Reaktors eignet sich grundsätzlich jedes Reaktionsgefäß, welches für die während der Reaktion herrschenden Drücke und Temperaturen ausgelegt ist. So kann es sich um Rührkesselreaktoren, Autoklaven und dergleichen handeln, wobei im Fall eines heterogenen Katalysators die Katalysatorschüttung im Festbett, im Rieselbett oder im Wirbelbett vorliegen kann.

Als Olefin im Sinne der Erfindung werden Olefine $C_2H_{4-n}R_n$, bezeichnet, die mindestens eine C=C-Doppelbindung enthalten, wobei $n \geq 1$ und $\leq 4$ ist und R Wasserstoff oder einen linearen oder verzweigten, gesättigten oder ein- oder mehrfach ungesättigeten C1- bis C20-Alkyl-, Cycloalkyl-, Aryl-, Alkylaryl- oder Aralkylrest bezeichnet, der zusätzlich ein- oder mehrere Heteroatome, insbesondere Sauerstoff, Stickstoff, Schwefel, Phosphor und/oder Silizium enthalten kann, und verschiedene R sich innerhalb eines Olefins $C_2H_{4-n}R_n$ unterscheiden können und/oder innerhalb eines Olefins $C_2H_{4-n}R_n$ verschiedene R so miteinander verknüpft sind, dass sie bi-, tri- oder polycylische Systeme ausbilden. Beispiele für Olefine sind Ethylen, Propylen, 1-Buten, 2-Buten, Isobuten, Butadien, 1-Penten, 1-Hexen, 4-Methyl-1-penten, 1-Hepten, 1-Octen, Isooctene, 1-Nonen, 1-Decen, Styrol, 2-Methylstyrol, 3-Methylstyrol, 4-Methylstyrol, $\alpha$-Methylstyrol, $\beta$-Methylstyrol, 4-Methoxystyrol, Acrylate oder Methacrylate mit linearen oder verzweigten, gesättigten oder ein- oder mehrfach ungesättigeten C1- bis C20-Alkyl-, Cycloalkyl-, Aryl-, Alkylaryl- oder Aralkylresten, die zusätzlich ein oder mehrere Heteroatome, insbesondere Sauerstoff, Stickstoff, Schwefel, Phosphor und/oder Silizium enthalten können, oder Silane $SiR^1R^2R^3R^4$, wobei $R^1$, $R^2$, $R^3$, $R^4$ unabhängig voneinander einen linearen oder verzweigten, gesättigten oder ein- oder mehrfach ungesättigeten C1-bis C20-Alkyl-, Cycloalkyl-, Aryl-, Alkylaryl- oder Aralkylrest bezeichnen, der zusätzlich ein oder mehrere Heteroatome, insbesondere Sauerstoff, Stickstoff, Schwefel, Phosphor und/oder Silizium enthalten kann, und mindestens einer der Reste $R^1$, $R^2$, $R^3$ und $R^4$ eine C=C-Doppelbindung trägt. Bevorzugte Olefine sind Ethylen, Propylen, 1-Buten, 1-Hexen, 4-Methyl-2-penten, 1-Octen, Isooctene, Cyclopenten, Cyclopentadien, Cyclohexen, Cycloocten, Cyclooctadien, Norbornen, Styrol, $\alpha$-Methylstyrol, Alkylacrylate mit linearen C1- bis C20-Alkyl- oder Hydroxyalkylresten, Trimethyl- oder Triethylvinylsilan und Trimethyl- oder Triethylallylsilan. Besonders bevorzugt sind Ethylen, 1-Hexen, Styrol, *n*-Butylacrylat und 4-Hydroxybutylacrylat. Die Bezeichnung Olefin im Sinne der Erfindung bezieht sich ebenfalls auf Gemische aus zwei oder mehreren Olefinen in beliebiger Zusammensetzung.

Als gasförmiges Olefin im Sinne der Erfindung werden Olefine $C_2H_{4-n}R_n$, bezeichnet, die mindestens eine C=C-Doppelbindung enthalten, und die unter Normalbedingungen (25 °C, 1013 mbar) im gasförmigen oder überkritischen Zustand vorliegen, wobei $n \geq 1$ und $\leq 4$ ist und R Wasserstoff oder einen linearen oder verzweigten, gesättigten oder ein- oder mehrfach ungesättigten C1- bis C20-Alkylrest bezeichnet, der zusätzlich ein oder mehrere Heteroatome, insbesondere Sauerstoff, Stickstoff, Schwefel und/oder Phosphor enthalten kann, und verschiedene R sich innerhalb eines Olefins $C_2H_{4-n}R_n$ unterscheiden können. Beispiele für gasförmige Olefine sind Ethylen, Propylen, 1-Buten, 2-Buten, Isobuten und Butadien. Die Bezeichnung gasförmiges Olefin bezieht sich im Sinne der Erfindung ebenfalls auf Gemische zweier oder mehrerer gasförmiger Olefine in beliebiger Zusammensetzung.

Als erstes, gasförmiges Olefin im Sinne der Erfindung kann jeder Vertreter der Gruppe der gasförmigen Olefine im Sinne der Erfindung, oder Gemische verschiedener Vertreter dieser Gruppe in beliebiger Zusammensetzung dienen.

Als zweites Olefin im Sinne der Erfindung werden Olefine im Sinne der Erfindung bezeichnet, welche nicht mit dem ersten, gasförmigen Olefin identisch sind.

Der Reaktor wird in Gegenwart oder Abwesenheit eines geeigneten Lösungsmittels mit einem ersten, gasförmigen Olefin oder einem Gemisch aus erstem, gasförmigen Olefinen und CO beaufschlagt, so dass im Reaktor ein erster Druck p1 beispielsweise zwischen 20 und 300 bar, bevorzugt zwischen 30 und 200 bar, besonders bevorzugt zwischen 30 und 100 bar herrscht, und bei Verwendung eines Gemisches aus erstem, gasförmigem Olefin und CO das Volumenverhältnis zwischen erstem, gasförmigem Olefin und CO > 60:40 beträgt. Die Anwesenheit eines zusätzlichen

Gases, wie beispielsweise Wasserstoff oder ein Inertgases wie z.B. Stickstoff oder Argon, wird nicht ausgeschlossen, wobei jedoch die Bedingung erfüllt bleibt, dass das Volumenverhältnis zwischen erstem, gasförmigem Olefin und CO > 60:40 beträgt.

Als Lösungsmittel für die Reaktion können aprotische Lösungsmittel wie z.B. Alkane, Cycloalkane, Aromaten wie z.B. Benzol, Toluol, Xylole, Mesitylene, chlorierte Alkane wie z.B. Dichlormethan, Chloroform, Dichlorethan, Tetrachlorethan, chlorierte Aromaten wie z.B. Chlorbenzol oder Dichlorbenzole, offenkettige oder zyklische Ether wie z.B. Diethylether, Methyl-tert-butylether, Tetrahydrofuran, 1,4-Dioxan, Polyether wie z.B. Ethylenglykoldimethylether, Diethylenglykoldimethylether oder deren höhere Homologe, Ester wie z.B. Essigsäureethylester, zyklische Carbonate wie z.B. Ethylencarbonat oder Propylencarbonat, offenkettige oder zyklische Amide wie z.B. *N,N*-Dimethylformamid, *N,N*-Dimethylacetamid, *N*-Methylpyrrolidinon, oder protische Lösungsmittel wie Alkohole, z.B. Methanol, Ethanol, Isopropanol, Diole wie z.B. Ethylenglykol, Diethylenglykol und dessen höhere Homologe oder Wasser bzw. Gemische aus zwei oder mehrerer der vorgenannten Lösungsmittel in beliebiger Zusammensetzung eingesetzt werden. Bevorzugte Lösungsmittel sind Dichlormethan, Methanol, Tetrachlorethan, besonders bevorzugt ist Dichlormethan.

In einer Verfahrensvariante kann das zweite Olefin zu Beginn der Reaktion im Reaktor vorgelegt werden.

In einem alternativen Verfahren kann das zweite Olefin während der Reaktion zum Reaktor zudosiert werden. Die beiden zuletzt genannten Verfahrensvarianten schließen sich nicht gegenseitig aus. So kann ein bestimmter Mengenanteil des zweiten Olefins vor der Reaktion im Reaktor vorgelegt werden und die Restmenge an zweitem Olefin während der Reaktion zudosiert werden.

Die Copolymerisation der Olefine mit CO findet in Gegenwart eines Katalysators statt. Als Katalysator dienen beispielsweise Verbindungen, die mindestens ein Metallatom ausgesucht aus den Elementen Eisen, Kobalt, Nickel, Ruthenium, Rhodium und/oder Palladium enthalten. Bevorzugte Katalysatoren enthalten Nickel oder Palladium, besonders bevorzugte Katalysatoren Palladium.

Bei der Verwendung eines Lösungsmittels beträgt die Konzentration des Katalysators bezogen auf das Metall in der Regel $1\times10^{-5}$ bis $1\times10^{-1}$ mmol/L, bevorzugt $1\times10^{-4}$ mmol/L bis $5\times10^{-2}$ mmol/L und besonders bevorzugt $5\times10^{-4}$ mmol/L bis $1\times10^{-2}$ mmol/L.

Der Katalysator oder eine Mischung der Katalysator-Komponenten Metallsalz oder -komplex und Ligand kann entweder in Reinform oder zusammen mit einem Lösungsmittel und/oder einem Olefin im Reaktor vorgelegt werden, oder während des Erwärmens des Reaktors auf Reaktionstemperatur oder nach Erreichen der Reaktionstemperatur in gelöster oder flüssiger Form in den Reaktor injiziert werden. Im Falle der Injektion kann die Injektion entweder in Anwesenheit oder Abwesenheit von Lösungsmittel erfolgen. Unabhängig davon kann der Reaktor zum Zeitpunkt der Injektion Olefin oder ein Gemisch aus Olefin und CO enthalten, wobei das Volumenverhältnis von gasförmigem Olefin und CO > 60:40 beträgt. Die Injektion kann jedoch auch in Abwesenheit von gasförmigem Olefin und/oder CO erfolgen. Die Anwesenheit eines weiteren Gases wie z.B. Wasserstoff, Stickstoff oder Argon ist in allen genannten Verfahrensvarianten nicht ausgeschlossen.

Zusätzlich zum Katalysator können weitere Additive eingesetzt werden, welche beispielsweise eine Aktivierung bzw. Stabilisierung des Katalysators begünstigen. Mögliche Additive sind z.B. in Dalton Trans. 2008, 4537 aufgeführt. Insbesondere gehören hierzu Methylaluminoxan (MAO), $[CPh_3][B(C_6F_5)_4]$ und andere Tetraarylborat-Salze, $B(C_6F_5)_3$ und Sulfonsäuren, wie z.B. 4-Toluolsulfonsäure. Diese Additive können entweder im Gemisch mit dem Katalysator oder separat vor oder nach Zufügen des Katalysators in das Reaktionsgemisch eingebracht werden.

Hinsichtlich der Reaktionsbedingungen wird die Reaktion in der Regel initiiert, wenn der Katalysator mit dem Olefin und CO bei einer Temperatur von ungefähr ≥ 90 °C und ≤ 150 °C in Kontakt ist.

Die Reaktionstemperatur während der Terpolymerisation beträgt in der Regel ≥ 90 °C und ≤ 150 °C. Die Temperatur kann durch Außen- und/oder Innenbeheizung des Reaktors eingestellt werden. Bevorzugt ist die Regelung der Reaktionstemperatur über die Innentemperatur des Reaktors. Aufgrund der hohen Exothermie der Reaktion ist ein zusätzlicher Schutz vor Überhitzung des Reaktors und des Reaktionsgemisches durch Gegenkühlung vorteilhaft. Diese kann durch Kühlung der Reaktoraußenwand und/oder bevorzugt durch entsprechende Einbauten, beispielsweise einer Kühlschlange, im Reaktor erfolgen und bevorzugt in die Temperaturkontrolle eingebunden werden.

Die Reaktionszeit der Copolymerisation kann frei gewählt werden. Die Reaktionszeit sollte jedoch länger sein als die Dauer, die zur Initiierung der Reaktion benötigt wird. Ohne auf eine Theorie festgelegt zu sein, kann Initiierung vorliegen, wenn die Reaktion zu Beginn bei geringeren Reaktionsgeschwindigkeiten abläuft als zu einem späteren Zeitpunkt. Die Dauer, die zur Initiierung der Reaktion benötigt wird, kann beispielsweise bestimmt werden durch Monitoring des Umsatzes an gasförmigem Olefin und CO. Wenn beispielsweise im Fall einer palladiumkatalysierten Reaktion der Umsatz pro Minute innerhalb von 5 Minuten um einen Faktor größer oder gleich 1,1 zunimmt und absolut größer als 1.5 $g/mmol_{Pd}\cdot min$ ist, kann die Initiierung der Reaktion als abgeschlossen betrachtet werden. Ein Monitoring des Umsatzes kann abhängig von der gewählten Verfahrensvariante beispielsweise erfolgen durch Bestimmung des Druckabfalls während der Reaktion und/oder der Volumina der zugeführten Gase in Abhängigkeit der Zeit. Die maximale Reaktionsdauer ist lediglich durch technische Faktoren wie z.B. Reaktorvolumen, Rührbarkeit und/oder Massentransport limitiert.

Die Terpolymerisation kann durch Abkühlen des Reaktors auf eine Temperatur unterhalb 90 °C, bevorzugt 50 °C und/oder Ablassen des Überdrucks beendet werden. Zusätzlich oder alternativ dazu kann eine Zugabe von Reagenzien erfolgen, welche den Katalysator desaktivieren. Als solche können beispielsweise Wasserstoff, Wasser, Ammoniak, primäre oder sekundäre Amine, Diole oder Gemische derselben in frei zu wählender Zusammensetzung zum Einsatz kommen.

Zur Isolierung der Olefin-CO-Terpolymere werden, sofern vorhanden, nach dem Ablassen des Überdrucks Lösungsmittel und/oder unreagierte flüssige Olefine entfernt. Dies kann durch Filtration und ggf. Waschen des erhaltenen Feststoffes mit einem der oben genannten Lösungsmittel erfolgen. Flüchtige Komponenten können alternativ oder zusätzlich im Anschluss destillativ entfernt werden. Dies kann bei Temperaturen zwischen einschließlich 20 °C und 90 °C, sowie ggf. bei einem verminderten Druck $\geq 1 \times 10^{-3}$ mbar und < 1013 mbar erfolgen. Weitere Aufreinigungsschritte wie beispielsweise Schmelzkristallisation, Fällung oder Umkristallisation aus einer Lösung des Copolymers in geeigneten Lösungsmitteln, ggf. bei erhöhten Temperaturen bis 120 °C, oder Dünnfilmverdampfung können angeschlossen werden, sind jedoch nicht zwingend notwendig.

Weitere Ausführungsformen der vorliegenden Erfindung werden nachfolgend beschrieben. Sie können beliebig miteinander kombiniert werden, sofern sich aus dem Kontext nicht einwandfrei das Gegenteil ergibt.

In einer Ausführungsform wird der Reaktor enthaltend den Katalysator oder die Katalysator-Komponenten sowie zweites Olefin mit einem Gemisch umfassend erstes, gasförmiges Olefin und CO auf einen Druck $p \leq p1$ beaufschlagt, wobei das Volumenverhältnis von gasförmigem Olefin : CO > 60:40 beträgt. Der Reaktor wird anschließend auf Reaktionstemperatur beheizt, wobei im Reaktor der Druck p1 erreicht wird. Die Terpolymerisationsreaktion startet beispielsweise bei Überschreiten einer Temperatur von ungefähr 90 °C.

In einer alternativen Ausführungsform kann die zuvor beschriebene Ausführungsform auch in Abwesenheit des zweiten Olefins zu Beginn der Reaktion durchgeführt werden und das zweite Olefin während des Beheizens und/oder unmittelbar oder zeitversetzt nach dem Beheizen zudosiert werden. Auch in dieser Ausführungsform ist zu beachten, dass das Verhältnis gasförmiges Olefin zu CO > 60:40 beträgt.

In einer weiteren Ausführungsform wird der Reaktor enthaltend den Katalysator oder die Katalysator-Komponenten sowie zweites Olefin auf Reaktionstemperatur geheizt und der Reaktor bei Reaktionstemperatur mit einem Gemisch umfassend erstes, gasförmiges Olefin und CO auf einen Druck p1 beaufschlagt, wobei das Volumenverhältnis von gasförmigem Olefin : CO > 60:40 beträgt. Die Terpolymerisationsreaktion startet dann in der Regel mit der Beaufschlagung des Reaktors.

In einer alternativen Ausführungsform kann die zuvor beschriebene Ausführungsform auch in Abwesenheit des zweiten Olefins zu Beginn der Reaktion durchgeführt werden und das zweite Olefin während des Beheizens und/oder unmittelbar oder zeitversetzt nach dem Beheizen bzw. der Beaufschlagung des Reaktors mit dem Gemisch umfassend erstes, gasförmiges Olefin und CO zudosiert werden. Auch in dieser Ausführungsform ist zu beachten, dass das Verhältnis gasförmiges Olefin zu CO > 60:40 beträgt.

In einer bevorzugten Ausführungsform wird der Reaktor enthaltend ein Gemisch aus erstem, gasförmigem Olefin und CO sowie zweites Olefin in einem Volumenverhältnis gasförmiges Olefin : CO > 60:40 bei einem Druck p < p1 auf Reaktionstemperatur beheizt, wobei bei Erreichen der Reaktionstemperatur im Reaktor ein Druck p' < p1 erreicht wird. Nach Erreichen der Reaktionstemperatur wird der Katalysator oder ein Gemisch der Katalysator-Komponenten injiziert, wobei mit der Injektion der Druck p1 erreicht wird und die Terpolymerisation startet.

In einer alternativen Ausführungsform kann die zuvor beschriebene Ausführungsform auch in Abwesenheit des zweiten Olefins zu Beginn der Reaktion durchgeführt werden und das zweite Olefin während des Beheizens und/oder unmittelbar oder zeitversetzt nach dem Beheizen bzw. der Injektion des Katalysators oder der Katalysator-Komponenten zudosiert werden. Auch in dieser Ausführungsform ist zu beachten, dass das Verhältnis gasförmiges Olefin zu CO > 60:40 beträgt.

In einer Ausführungsform des erfindungsgemäßen Verfahrens werden dem Reaktor während der Reaktion zumindest zeitweise erstes, gasförmiges Olefin und CO sowie ggf. zweites Olefin so zudosiert, dass das Volumenverhältnis von zudosiertem gasförmigem Olefin und CO im zeitlichen Mittel > 60:40 beträgt. Dies kann durch kontinuierliche Zudosierung der getrennten gasförmigen Komponenten gasförmiges Olefin und CO in einem Volumenstromverhältnis > 60:40 oder eines Gemisches aus gasförmigem Olefin und CO in einem Volumenverhältnis > 60:40 erfolgen. Alternativ kann eine abwechselnde oder gleichzeitige pulsartige Zudosierung von getrennten Volumina an gasförmigem Olefin und CO in einem über die Zeit gemittelten Volumenverhältnis gasförmiges Olefin : CO > 60:40 oder eine pulsartige Zudosierung eines Gemisches aus gasförmigem Olefin und CO in einem Volumenverhältnis > 60:40 erfolgen. Bevorzugt ist die kontinuierliche Zudosierung der getrennten gasförmigen Komponenten oder eines Gemisches.

Die Zudosierung wird so durchgeführt, dass der Druck im Reaktor während der Copolymerisation beispielsweise zwischen 20 und 300 bar, bevorzugt zwischen 30 und 200 bar, besonders bevorzugt zwischen 30 und 100 bar beträgt.

Die Dosiergeschwindigkeit kann manuell durch kontinuierliches oder wiederholtes Einstellen des Druckes mit den zuzudosierenden Gasen erfolgen, wobei ein über die Zeit gemitteltes Volumenverhältnis von gasförmigem Olefin : CO > 60:40 eingehalten wird. Bevorzugt ist die Zudosierung mit Hilfe von Massenflussreglern oder Cori-Flow-Reglern,

die mit einem digitalen Druckabnehmer verknüpft sind und den auftretenden Druckverlust differentiell durch Zudosierung von gasförmigem Olefin und CO in einem Volumenstromverhältnis gasförmiges Olefin : CO > 60:40, oder eines Gemisches von gasförmigem Olefin und CO in einem Volumenverhältnis gasförmiges Olefin : CO > 60:40 kompensieren.

In einer Ausführungsform des erfindungsgemäßen Verfahrens liegt während der Reaktion der Druck im Reaktor im Bereich von ≥ 80% von p1 bis ≤ 120% von p1, bevorzugt ≥ 90% von p1 bis ≤ 110% von p1, besonders bevorzugt ≥ 95% von p1 bis ≤ 105% von p1.

In einer weiteren Ausführungsform des erfindungsgemäßen Verfahrens wird der während der Reaktion auftretende Druckverlust durch Nachführen von gasförmigem Olefin und CO in den Reaktor ausgeglichen, wobei das Volumenverhältnis des nachgeführten gasförmigen Olefins zum nachgeführten CO im zeitlichen Mittel > 60:40 beträgt.

In einer weiteren Ausführungsform des erfindungsgemäßen Verfahrens umfasst der Katalysator Palladium. In einer bevorzugten Ausführungsform wird ein Katalysator verwendet, der Palladium sowie vorzugsweise einen anionischen, zweizähnigen Liganden enthält, welcher ein über mindestens zwei und maximal vier weitere Atome mit einem Sauerstoff-Anion verbrücktes Phosphoratom enthält. Das Sauerstoff-Anion liegt vorzugsweise in Form einer Sulfonat-Gruppe vor. Die Brücke zum Sauerstoff-Anion enthält vorzugsweise eine C=C-Doppelbindung, die besonders bevorzugt Teil eines aromatischen Systems ist. Das Phosphoratom liegt vorzugsweise in der Oxidationsstufe 3 vor und trägt neben dem verbrückenden Substituenten zwei weitere Alkyl- bzw. Arylsubstituenten. Besonders bevorzugt trägt das Phosphoratom neben dem verbrückenden Substituenten zwei *ortho*-alkoxysubstituierte Arylgruppen als Substituent. Ganz besonders bevorzugte Liganden sind Phosphin-Sulfonato-Liganden der Formel I,

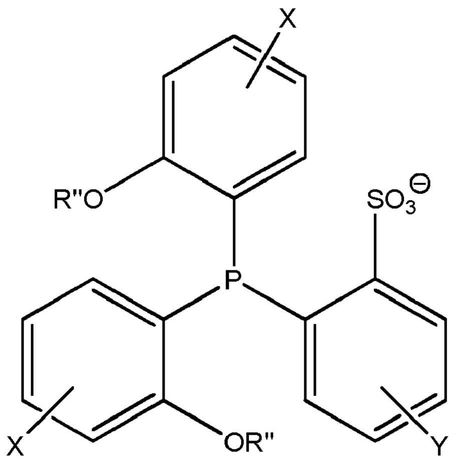

(I)

wobei

R" für einen linearen oder verzweigten, gesättigten oder ein- oder mehrfach ungesättigten C1- bis C20-Alkyl- oder Arylrest steht, der zusätzlich ein oder mehrere Heteroatome, insbesondere Sauerstoff, Stickstoff, Schwefel und/oder Phosphor enthalten kann,

und X und Y unabhängig voneinander für Wasserstoff oder einen oder mehrere lineare oder verzweigte, gesättigte oder ein- oder mehrfach ungesättigte C1- bis C20-Alkyl-, -Aryl-, -Alkylaryl-, Arylalkyl-, -Alkyloxy-, Aryloxy-, -Alkylaryloxy- oder -Arylalkoxyrest stehen, die zusätzlich ein oder mehrere Heteroatome, insbesondere Sauerstoff, Stickstoff, Schwefel oder Phosphor enthalten können.

Weitere Substituenten an den aromatischen Ringsystemen, wie z.B. weitere lineare oder verzweigte, gesättigte oder ein- oder mehrfach ungesättigte C1- bis C20-Alkyl-, -Aryl-, -Alkylaryl-, Arylalkyl-, - Alkyloxy-, Aryloxy-, -Alkylaryloxy- oder -Arylalkoxyreste, Halogenatome, insbesondere Chlor oder Fluor, Nitrogruppen und/oder Sulfonsäuregruppen sind nicht ausgeschlossen. Weiterhin können die aromatischen Ringe unabhängig voneinander Teil eines bi-, tri-, tetrazyklischen oder höheren Ringsystems sein.

In einer bevorzugten Ausführungsform wird ein Komplex enthaltend Palladium und den Liganden in einem molaren Verhältnis 1:1 eingesetzt. Bevorzugte komplexe Katalysatoren sind Pd(L^L')(P^O), wobei P^O für einen Liganden der Formel I steht und L^L' für 2-Alkoxycyclooct-5-enyl oder 6-Alkoxy-exo-5,6-dihydrodicyclopentadienyl, wobei die Alkoxygruppen von linearen oder verzweigten C1- bis C20-Alkylresten abgeleitet sind. Besonders bevorzugt gilt für den Liganden P^O der Formel IR" = $CH_3$, X = H und Y = H oder $CH_3$ und für die Alkoxygruppen in L^L' Methoxy und Ethoxy. In einer weiteren Ausführungsform des erfindungsgemäßen Verfahrens wird der Katalysator aus Vorläuferverbindungen im *Reaktor in situ* gebildet. In einer bevorzugten Ausführungsform wird der Katalysator vor der Reaktion oder *in situ*

generiert durch Mischen eines Metallsalzes oder - komplexes mit dem Liganden in protonierter oder deprotonierter Form in einem molaren Verhältnis Metall : Ligand 1:0,5 bis 1:5, bevorzugt 1:0,8 bis 1:2, besonders bevorzugt 1:1 bis 1:1,5 in einem geeigneten Lösungsmittel aus der oben genannten Auswahl. Bevorzugte Metallsalze oder -komplexe sind Nickel- oder Palladiumsalze oder -komplexe wie z.B. $Ni(acac)_2$, $Ni(cod)_2$, $[Ni(allyl)Cl]_2$, $[Ni(allyl)Br]_2$, $Ni(PPh_3)PhCl$, Ni(dme)Br, $Pd(OAc)_2$, $[Pd(allyl)Cl]_2$, $[Pd(allyl)Br]_2$, PdMeCl(cod), $[Pd(L\text{^}L')Cl]_2$ besonders bevorzugt sind $Pd(OAc)_2$, $[Pd(L\text{^}L')Cl]_2$ (wobei acac = Acetylacetonat, cod = 1,5-Cyclooctadien, dme = Dimethoxyethan und L^L' die oben angegebene Bedeutung hat).

In einer weiteren Ausführungsform wird vor der Reaktion des ersten Olefins mit CO eine Homopolymerisation des ersten Olefins oder eine Copolymerisation von mehreren Olefinen in Abwesenheit von CO im Reaktor durchgeführt. Diese Ausführungsform bietet den Vorteil, dass mögliche Initiierungszeiten mit geringer Reaktionsgeschwindigkeit zu Beginn der Polymerisationsreaktion vermieden werden. Dies führt zu einer höheren Turnover-Frequenz (TOF), ausgedrückt in $g_{Produkt}/(mmol_{Pd} \times h)$, im Vergleich zu Verfahrenvarianten, in denen die Terpolymerisation von Olefinen und CO ohne vorherige Homopolymerisation des ersten Olefins bzw. Copolymerisation mehrerer Olefine im Reaktor durchgeführt wird.

In einer Ausführungsform wird der Reaktor enthaltend den Katalysator oder die Katalysator-Komponenten sowie zweites Olefin mit erstem, gasförmigem Olefin in Abwesenheit von CO bei einem Druck p < p1 beaufschlagt. Der Reaktor wird anschließend auf Reaktionstemperatur beheizt, wobei im Reaktor der Druck p1 erreicht wird. Bei Überschreiten einer Temperatur von ungefähr 90 °C startet die die Copolymerisation des ersten, gasförmigen und des zweiten Olefins. Die Terpolymerisation mit CO wird durch Zudosieren von erstem, gasförmigem Olefin und CO in einem über die Zeit gemittelten Volumenverhältnis von gasförmigem Olefin : CO > 60:40 durchgeführt. Das Zudosieren von erstem, gasförmigem Olefin und CO kann direkt im Anschluss an den Start der Copolymerisation von erstem, gasförmigem und zweitem Olefin, oder zeitversetzt erfolgen.

In einer alternativen Ausführungsform kann die zuvor beschriebene Ausführungsform auch in Abwesenheit des zweiten Olefins zu Beginn der Reaktion durchgeführt werden und das zweite Olefin zu einem späteren Zeitpunkt zudosiert werden. Dies kann beispielsweise während des Beheizens und/oder unmittelbar oder zeitversetzt nach dem Beheizen und/oder parallel zur Zudosierung des Gemisches aus erstem, gasförmigem Olefin und CO erfolgen. Auch in dieser Ausführungsform ist zu beachten, dass das Verhältnis gasförmiges Olefin zu CO im zeitlichen Mittel > 60:40 beträgt.

In einer bevorzugten Ausführungsform wird der Reaktor enthaltend erstes, gasförmiges Olefin sowie zweites Olefin in Abwesenheit von CO auf Reaktionstemperatur beheizt, wobei bei Erreichen der Reaktionstemperatur im Reaktor ein Druck p' < p1 erreicht wird. Nach Erreichen der Reaktionstemperatur werden der Katalysator oder die Katalysator-Komponenten injiziert, wobei mit der Injektion der Druck p1 erreicht wird und die Copolymerisation des ersten und des zweiten Olefins startet. Die Terpolymerisation mit CO wird durch Zudosieren von erstem, gasförmigem Olefin und CO in einem über die Zeit gemittelten Volumenverhältnis von gasförmigem Olefin: CO > 60:40 initiiert. Das Zudosieren von gasförmigem Olefin und CO kann direkt im Anschluss an den Start der Copolymerisation des ersten, gasförmigen Olefins und des zweiten Olefins oder zeitversetzt erfolgen.

In einer alternativen Ausführungsform kann die zuvor beschriebene Ausführungsform auch in Abwesenheit des zweiten Olefins zu Beginn der Reaktion durchgeführt werden und das zweite Olefin zu einem späteren Zeitpunkt zudosiert werden. Dies kann beispielsweise während des Beheizens und/oder unmittelbar oder zeitversetzt nach dem Beheizen und/oder parallel zur oder zeitversetzt nach der Injektion des Katalysators oder der Katalysator-Komponenten erfolgen. Auch in dieser Ausführungsform ist zu beachten, dass das Verhältnis gasförmiges Olefin zu CO im zeitlichen Mittel > 60:40 beträgt.

Alternativ kann der Katalysator oder ein Gemisch der Katalysator-Komponenten mit Hilfe eines Gemisches aus gasförmigem Olefin und CO in einem Volumenverhältnis gasförmiges Olefin: CO > 60:40 in den Reaktor enthaltend erstes, gasförmiges und ggf. zweites Olefin injiziert werden. Aufgrund des zum Zeitpunkt der Injektion vernachlässigbaren CO-Gehaltes im Reaktor wird mit der Injektion eine Homopolymerisation des ersten, gasförmigen Olefins bzw. eine Copolymerisation des ersten, gasförmigen Olefins mit dem zweiten Olefin initiiert, welche beim weiteren Zudosieren des Gemisches aus gasförmigem Olefin und CO in eine Co- bzw. Terpolymerisation übergeht. In dem Fall, dass zu Beginn der Reaktion eine Homopolymerisation des ersten, gasförmigen Olefins in Abwesenheit des zweiten Olefins durchgeführt wird, wird das zweite Olefin zu einem späteren Zeitpunkt zudosiert. Dies kann entweder parallel zur und/oder zeitversetzt nach der Injektion des Katalysators oder der Katalysator-Komponenten erfolgen.

In einer weiteren Ausführungsform des erfindungsgemäßen Verfahrens beträgt der Druck p1 ≥ 20 bar bis ≤ 300 bar. Bevorzugte Drücke sind ≥ 30 bis ≤ 200 bar, besonders bevorzugt ≥ 30 bar ≤ 80 bar.

In einer weiteren Ausführungsform des erfindungsgemäßen Verfahrens wird die Reaktion bei einer Temperatur von ≥ 90 °C bis ≤ 150 °C durchgeführt, bevorzugt ≥ 95 °C und ≤ 130 °C, besonders bevorzugt ≥ 100 °C und ≤ 120 °C.

In einer weiteren Ausführungsform des erfindungsgemäßen Verfahrens ist während der Reaktion das Verhältnis von erstem, gasförmigem Olefin zu CO zeitlich variabel. Auf diese Weise lassen sich Gradientenpolymere erhalten.

In einer weiteren Ausführungsform des erfindungsgemäßen Verfahrens wird der Katalysator oder ein Gemisch der Katalysator-Komponenten bei einer Temperatur von ≥ 90 °C bis ≤ 150 °C in den Reaktor enthaltend erstes und/oder

zweites Olefin oder ein Gemisch aus erstem und/oder zweitem Olefin und CO injiziert. Der Vorteil dieser Ausführungsform besteht darin, dass der Startzeitpunkt der Polymerisationsreaktion sowie die Startbedingungen, insbesondere Druck und Temperatur, klar definiert sind. Dies führt insbesondere zu einer einheitlicheren Molekulargewichtsverteilung des erhaltenen Olefin-CO-Terpolymers. Weiterhin wird eine mögliche Desaktivierung des Katalysators während des Aufheizprozesses vermieden.

Die vorliegende Erfindung betrifft weiterhin ein Olefin-CO-Terpolymer, erhältlich durch ein erfindungsgemäßes Verfahren, wobei der Gehalt an in das Copolymer eingebautem CO bezogen auf alle eingebauten Monomere $\leq$ 10 mol-% beträgt. Die Bestimmung des Gehalts an eingebautem CO wird ausführlich im experimentellen Teil weiter unten beschrieben. Vorzugsweise beträgt der Gehalt an in das Terpolymer eingebautem CO bezogen auf alle eingebauten Monomere $\geq$ 0,1 mol-% bis $\leq$ 10 mol-% und besonders bevorzugt $\geq$ 0,5 mol-% bis $\leq$ 4 mol-%.

Die erfindungsgemäßen Olefin-CO-Terpolymere weisen einen Verzweigungsgrad von < 60, vorzugsweise < 20, besonders bevorzugt < 17 Verzweigungen pro 1000 C-Atome auf. Der Verzweigungsgrad gibt die durchschnittliche Anzahl der Verzweigungen pro 1000 im Polymer enthaltener C-Atome an und kann beispielsweise $^{13}$C-NMR-spektroskopisch bestimmt werden durch das Verhältnis der Flächenintegrale der Signale für verzweigende (also mindestens dreifach substituierte C-Atome) $Ic_{verzw.}$ zu der Gesamtsumme der Flächenintegrale I; aller Signale der im Polymer enthaltenen C-Atome i.

Da durch jede Verzweigung eine zusätzlichen Endgruppe in das Polymer eingeführt wird, kann der Verzweigungsgrad ebenfalls bestimmt werden über die durchschnittliche Anzahl der zusätzlichen Endgruppen, also der in verzweigten Ketten zusätzlich zu den zwei theoretisch in einer linearen Kette enthaltenen Endgruppen, pro 1000 im Polymer enthaltener C-Atome.

Der Verzweigungsgrad VG ist dann nach Formel (II)

$$VG = 1000 \times \frac{n_{EG,Mol} - 2}{n_{C,Mol}} \qquad \text{(II)},$$

wobei $n_{EG,\ Mol}$ die durchschnittliche Anzahl der Endgruppen pro Molekül und $nc_{,\ Mol}$ die durchschnittliche Gesamtzahl der C-Atome pro Molekül bezeichnet. Diese Bestimmung kann beispielsweise auf $^1$H-NMR-spektroskopischem Wege erfolgen und ist in der Beschreibung der Methoden ausführlich beschrieben.

Die erfindungsgemäßen Olefin-CO-Terpolymere weisen in der Regel eine Schmelzviskosität unterhalb 1,4 Pa·s bei 120 °C auf.

In einer Ausführungsform dieses Olefin-CO-Terpolymers weist dieses ein zahlenmittleres Molekulargewicht $M_n$ von $\leq$ 15000 g/mol auf. Dieses Molekulargewicht lässt sich mittels NMR-Spektroskopie oder Gel-Permeations-Chromatographie bestimmen, wie im experimentellen Teil erläutert wird. Vorzugsweise beträgt das Molekulargewicht $M_n \geq$ 500 g/mol bis $\leq$ 15000 g/mol, mehr bevorzugt $\geq$ 900 g/mol bis $\leq$ 5000 g/mol.

In einer weiteren Ausführungsform dieses Olefin-CO-Terpolymers weist dieses einen Schmelzpunkt von $\leq$ 115 °C auf. Vorzugsweise beträgt der Schmelzpunkt $\geq$ -80 °C bis $\leq$ 115 °C, mehr bevorzugt > 0 °C bis $\leq$ 113 °C. Der Schmelzpunkt kann mittels Differential Scanning Calorimetry (DSC) bei einer Aufheizrate von 10 K/min bestimmt werden, wie im experimentellen Teil erläutert.

Ein weiterer Gegenstand der vorliegenden Erfindung ist eine Polyolverbindung, erhältlich durch Reduktion eines erfindungsgemäßen Olefin-CO-Terpolymers. Unter reduktiven Bedingungen können aus den Olefin-CO-Terpolymeren Polyalkohole erhalten werden, welche ebenfalls vielfältige Anwendungen finden, z.B. als Weichmacher oder in der Herstellung von Polyurethanpolymeren oder Formaldehydharzen.

Die Reduktion kann beispielsweise durch Hydrierung mit Wasserstoff an heterogenen oder homogenen Metallkatalysatoren durchgeführt werden. Alternativ ist die Reduktion mit Alkalimetallen oder Hydrid-Reagenzien wie z.B. Natriumborhydrid, Lithiumaluminiumhydrid, Boran (beispielsweise als Tetrahydrofuran- oder Dimethylsulfid-Komplex), Alkyl- oder Dialkylboranen oder Silanen mit der Struktur $SiH_{4-a}R_a$ mit a = 1, 2 oder 3 und R = Alkyl- oder Arylrest möglich.

Die Hydrierung mit Wasserstoff kann beispielsweise nach Verfahren durchgeführt werden, welche in J. Polymer Science (1998), 889 und Recent Research Developments in Polymer Science (1999), 355, JP 01-149828, JP 11-035676, JP 11-035677, EP 0 791 615 A1, JP 02-232228, EP 830 932 A2, EP 0 735 081 A2, JP 10-081745 und JP 09-235370 beschrieben werden.

In einem bevorzugten Verfahren erfolgt die Reduktion der Olefin-CO-Terpolymere zu den entsprechenden Polylalkoholen mit molekularem Wasserstoff unter Einsatz eines heterogenen Hydrierkatalysators. Die Hydrierung erfolgt vorzugsweise bei Temperaturen zwischen 20 °C und 200 °C und bei Drücken zwischen 10 bar und 100 bar. Der Gehalt an heterogenem Hydrierkatalysator kann beispielsweise 0,01 Gewichts-% bis 100 Gewichts-% (Metallgehalt bezogen auf das Polymer), vorzugsweise 0,1 Gewichts-% bis 40 Gewichts-%, betragen.

Bevorzugte Katalysatoren enthalten die Elemente Cobalt, Nickel, Ruthenium, Rhodium und/oder Iridium. Die

Katalysatoren können als Raney-Katalysatoren oder auf geeigneten Trägern verwendet werden. Besonders bevorzugt werden Raney-Nickel, Raney-Cobalt oder geträgerte Cobalt-, Nickel-, Ruthenium- und Rhodium-Katalysatoren eingesetzt. Die Katalysatoren können auch als Mischungen der bevorzugten Elemente Cobalt, Nickel, Ruthenium, Rhodium, Iridium untereinander vorliegen oder ≤ 50 Gewichts-%, bezogen auf den Metallanteil, an anderen Elementen wie beispielsweise Rhenium, Palladium oder Platin enthalten.

Der heterogene Hydrierkatalysator kann weiterhin frei von Palladium und Platin sein, wobei "frei von" technisch unvermeidliche Verunreinigungen mit einschließt.

Als Trägermaterialien eignen sich besonders Kohlenstoff und Oxide, wie Siliziumdioxid, Aluminiumdioxid, Mischoxide aus Siliziumdioxid und Aluminiumdioxid sowie Titandioxid.

Die Hydrierung kann in Gegenwart oder Abwesenheit von Lösungsmitteln durchgeführt werden. Als Lösungsmittel eignen sich besonders $C_1$- bis $C_8$-Alkohole sowie Mischungen dieser untereinander oder mit anderen Lösungsmitteln wie THF oder 1,4-Dioxan.

In einer Variante wird die Hydrierung bei einem Wasserstoffdruck von ≤ 100 bar durchgeführt. Hierunter ist der Wasserstoffdruck zu verstehen, welcher zu Beginn der Hydrierungsreaktion herrscht, wenn bereits die vorgesehene Reaktionstemperatur erreicht wurde. So kann beispielsweise bei Raumtemperatur ein Wasserstoffdruck von 80 bar eingestellt werden, welcher nach Aufheizen auf eine Reaktionstemperatur von ca. 200 °C auf 100 bar steigt. Vorzugsweise beträgt dieser Wasserstoffdruck ≥ 40 bar bis ≤ 100 bar. Besonders bevorzugt ist ein Wasserstoffdruck von ≥ 80 bar bis ≤ 100 bar.

In einer weiteren Variante erfolgt die Hydrierung in Gegenwart eines Hydroxylgruppen umfassenden Lösungsmittels oder Lösungsmittelgemisches. Mit eingeschlossen in den Begriff des Hydroxylgruppen umfassenden Lösungsmittels ist Wasser. Ein Beispiel für ein besonders geeignetes Lösungsmittel ist 2-Propanol (Isopropanol). Ein weiteres Beispiel ist ein Gemisch von 2-Propanol mit Wasser im Volumenverhältnis von ≥ 5:1 bis ≤ 10:1. Die hydroxylgruppenhaltige Komponente des Lösungsmittelgemisches kann auch alleine durch Wasser bereitgestellt werden. Ein Beispiel hierfür ist ein Gemisch von 1,4-Dioxan mit Wasser im Volumenverhältnis von ≥ 5:1 bis ≤ 10:1.

Die durch Reduktion eines nach dem erfindungsgemäßes Verfahren hergestellten Olefin-CO-Terpolymers erhaltenen Polyalkohole sind besonders gut als Weichmacher, Vernetzer oder Bindemittel für mit Polyisocyanaten oder Formaldehydharzen chemisch vernetzte Lacke geeignet. Daher betrifft die vorliegende Erfindung weiterhin die Verwendung von durch Reduktion eines nach dem erfindungsgemäßes Verfahren hergestellten Olefin-CO-Terpolymers erhaltenen Polyalkoholen zur Herstellung von Polyurethanpolymeren oder Formaldehydharzen oder als Weichmacher.

Ebenfalls betrifft die vorliegende Erfindung eine Polyamin- und/oder Polyamin-Polyalkoholverbindung, erhältlich durch reduktive Aminierung eines erfindungsgemäßen Olefin-CO-Terpolymers. Durch reduktive Aminierung der (nach dem erfindungsgemäßes Verfahren hergestellten) Olefin-CO-Terpolymere können Polyamine bzw. Polyamin-Polyalkohole, welche sowohl Amino- als auch Hydroxygruppen enthalten, hergestellt werden.

Die durch reduktive Aminierung der Olefin-CO-Terpolymere erhaltenen Polyamine oder Polyamin-Polyalkohole sind interessante Reaktionspartner z.B. für Isocyanate oder Epoxide. Moleküle, die mehr als zwei Amin- oder Hydroxygruppen enthalten, sind interessante Vernetzer, die zusammen mit Amin- oder Hydroxyreaktiven Verbindungen, wie Polyisocyanaten oder Polyepoxiden, zu dreidimensionalen Netzwerken verbunden werden können. Zur Steuerung der Reaktivität können die primären Aminogruppen auch mit Maleinsäureestern zu Asparaginsäureestern oder mit Ketonen oder Aldehyden zu Ketiminen oder Aldiminen umgesetzt werden. Ferner können die Amingruppen mit Phosgen zu Isocyanaten umgesetzt werden. Diese Polyisocyanate sind ebenfalls interessante Polymerbausteine.

Die reduktive Aminierung kann durch Umsetzung der (nach dem erfindungsgemäßen Verfahren erhaltenen) Olefin-CO-Terpolymere mit Hydroxylamin oder Hydroxylamin-Hydrochlorid zu den entsprechenden Polyoximen und anschließender Reduktion der erhaltenen Polyoxime erfolgen.

Für die Bildung der Polyoxime aus den (nach dem erfindungsgemäßen Verfahren erhaltenen) Olefin-CO-Terpolymeren wird Hydroxylamin in ein bis zehnfach molaren Mengen bezogen auf die in den nach dem erfindungsgemäßen Verfahren erhaltenen Olefin-CO-Terpolymeren enthaltenen Carbonylgruppen eingesetzt. Vorzugsweise wird Hydroxylamin als wässrige Lösung oder in Substanz eingesetzt. Es kann aber auch *in situ* aus Salzen des Hydroxylamins, wie Hydrochlorid oder Sulfat, in wässriger oder alkoholischer Lösung mit Basen freigesetzt werden. Die Umsetzung der nach dem erfindungsgemäßen Verfahren erhaltenen Olefin-CO-Terpolymere mit Hydroxylamin kann in einem Zweiphasengemisch durchgeführt werden. Bevorzugt wird ein Zweiphasengemisch, das sich aus dem (nach dem erfindungsgemäßen Verfahren erhaltenen) Olefin-CO-Terpolymer oder einer Lösung des (nach dem erfindungsgemäßen Verfahren erhaltenen) Olefin-CO-Terpolymers in einem inerten Lösungsmittel, wie Benzol, Toluol, Chlorbenzol, Dichlorbenzol, Chloroform, Dichlorethan oder Tetrachlorethan und der wässrigen Hydroxylaminlösung bildet, eingesetzt. Ferner können auch zumindest teilweise in Wasser lösliche, gegenüber Hydroxylamin inerte Lösungsmittel, wie Methanol, Ethanol, Isopropanol, n-Propanol, n-Butanol, Dioxan, Tetrahydrofuran (THF), *N,N*-Dimethylformamid (DMF), *N*-Methylpyrrolidon (NMP) oder *N,N*-Dimethylacetamid als Lösungsvermittler eingesetzt werden. Die Reaktion wird bei Temperaturen von 0 bis 130 °C durchgeführt. Anschließend kann das Polyoxim durch Phasentrennung, Filtration oder/und Abdestillieren der flüchtigen Bestandteile der Reaktionsmischung isoliert werden.

Die Reduktion der Polyoxime, die aus den (nach dem erfindungsgemäßen Verfahren erhaltenen) Olefin-CO-Terpolymeren hergestellt wurden, erfolgt mit einem geeigneten Reduktionsmittel, bevorzugt molekularem Wasserstoff unter Einsatz eines selektiven homogenen oder heterogenen Hydrierkatalysators. Die Hydrierung mit Wasserstoff erfolgt bei Temperaturen von 20 bis 200 °C, vorzugsweise von 80 bis 180 °C, besonders bevorzugt von 120 bis 160 °C, bei Drücken von 10 bis 200 bar, bevorzugt 10 bis 100 bar, besonders bevorzugt 10 bis 50 bar in Gegenwart von 0,1 bis 20 Gew.-% an Hydrierkatalysatoren, wie z.B. Kobalt, Nickel, Ruthenium, Rhodium, Palladium, Iridium, Platin. Die Katalysatoren können als Raney-Katalysatoren oder auf geeigneten Trägern eingesetzt werden. Bevorzugt werden Raney-Kobalt, Raney-Nickel, geträgerte Kobalt-, Nickel- oder Ruthenium-Katalysatoren eingesetzt. Als Trägermaterialien eignen sich besonders Kohlenstoff und Oxide, wie Siliziumdioxid, Aluminiumdioxid, Mischoxide aus Siliziumdioxid und Aluminiumdioxid sowie Titanoxid. Vorzugsweise wird die Hydrierung in Gegenwart von Ammoniak, besonders bevorzugt in äquimolarer Menge bezogen auf Oximgruppen durchgeführt. Die Hydrierung kann in Gegenwart oder Abwesenheit von Lösungsmitteln durchgeführt werden. Als Lösungsmittel eignen sich beispielsweise THF, Dioxan, oder C1-C4 Alkohole. Andere Reduktionsmittel sind Alkalimetalle oder deren Hydride, Alanate oder Boranate.

In einem alternativen Verfahren kann die reduktive Aminierung der (nach dem erfindungsgemäßen Verfahren erhaltenen) Olefin-CO-Terpolymere direkt durch deren Umsetzung mit Ammoniak und anschließende Reduktion erhalten werden, wobei die beiden Verfahrensschritte Umsetzung mit Ammoniak und Reduktion zeitgleich in einem gemeinsamen Reaktor durchgeführt werden können.

In einer Variante des Verfahrens zur direkten reduktiven Aminierung der (nach dem erfindungsgemäßen Verfahren erhaltenen) Olefin-CO-Terpolymere ist der Reaktor ein Rieselbettreaktor. Durch solch einen Reaktor können in vorteilhafter Weise eine hohe Reaktionstemperatur und ein hohes Katalysator/Substrat-Verhältnis erreicht werden. Bevorzugt wird das Reaktionsgemisch umfassend Gas- und Flüssigphase im Gleichstrom nach unten durch die Katalysatorschüttung geleitet. Gas- und Flüssigphase können jedoch auch im Gleichstrom nach oben oder im Gegenstrom durch die Katalysatorschüttung geleitet werden. In einer alternativen Variante wird eine bewegte Katalysatorschüttung von unten angeströmt. Gas- und Flüssigphase können vor dem Reaktor oder innerhalb des Reaktors oder in der Katalysatorschüttung in Kontakt miteinander gebracht werden.

Die Gasphase umfasst Wasserstoff und gasförmigen Ammoniak sowie gegebenenfalls Inertgas und/oder Lösungsmitteldämpfe. Die flüssige Phase besteht aus dem nach dem erfindungsgemäßen Verfahren erhaltenen Olefin-CO-Terpolymer, flüssig vorliegendem oder gelöstem Ammoniak sowie gegebenenfalls Lösungsmittel.

In einer weiteren Variante umfasst der heterogene Hydrierkatalysator Metalle ausgewählt aus der Gruppe umfassend Kobalt, Nickel, Ruthenium, Rhodium, Palladium, Iridium und/oder Platin. Die Katalysatoren können als Raney-Katalysatoren oder auf geeigneten Trägern eingesetzt werden. Es können auch Legierungen, die die vorgenannten Metalle enthalten, eingesetzt werden. Alternativ können auch Mischungen der vorgenannten Katalysatoren eingesetzt werden. Bevorzugt werden Raney-Kobalt, Raney-Nickel, oder geträgerte Kobalt-, Nickel- oder Ruthenium-Katalysatoren eingesetzt. Als Trägermaterialien eignen sich besonders Kohlenstoff und Oxide, wie Siliziumdioxid, Aluminiumdioxid, Mischoxide aus Siliziumdioxid und Aluminiumdioxid sowie Titanoxid.

In einer weiteren Variante des Verfahrens wird die Reaktion bei einer Temperatur von ≥ 80 °C bis ≤ 280 °C durchgeführt. Bevorzugt ist ein Temperaturbereich von ≥ 160 °C bis ≤ 240 °C. Besonders bevorzugt ist ein Temperaturbereich von ≥ 180 °C bis ≤ 220 °C.

In einer weiteren Variante des Verfahrens wird die Reaktion bei einem Wasserstoffdruck von ≥ 10 bar bis < 150 bar, bevorzugt von ≥ 20 bar bis ≤ 80 bar durchgeführt. Besonders bevorzugt ist ein Druckbereich von ≥ 30 bar bis ≤ 50 bar.

In einer weiteren Variante des Verfahrens wird die Reaktion bei einer Verweilzeit der flüssigen Phase im Katalysatorbett des Festbettreaktors von ≥ 1 Sekunde bis ≤ 1 Stunde durchgeführt. Bevorzugte Verweilzeiten liegen im Bereich von ≥ 5 Sekunden bis ≤ 10 Minuten. Besonders bevorzugte Verweilzeiten liegen im Bereich von ≥ 10 Sekunden bis ≤ 5 Minuten.

In einer weiteren Variante des Verfahrens beträgt das molare Verhältnis von Ammoniak zu Ketogruppen im eingesetzten Olefin-CO-Terpolymer ≥ 1:1 bis ≤ 500:1. Bevorzugte Verhältnisse liegen im Bereich von ≥ 3:1 bis ≤ 100:1. Besonders bevorzugte Verhältnisse liegen im Bereich von ≥ 5:1 bis ≤ 50:1.

Das (nach dem erfindungsgemäßen Verfahren erhaltene) Olefin-CO-Terpolymer kann flüssig oder geschmolzen in Reinsubstanz oder gelöst in einem Lösungsmittel eingesetzt werden. In einer weiteren Ausführungsform wird die reduktive Aminierung in Gegenwart eines Lösungsmittels durchgeführt, das ausgewählt ist aus der Gruppe umfassend $C_1$-$C_4$-Alkohole, 1,2-Dioxan, 1,3-Dioxan, 1,4-Dioxan, Tetrahydrofuran, 2-Methyltetrahydrofuran, 3-Methyltetrahydrofuran, 2,5-Dimethyltetrahydrofuran, Tetrahydrofurfurylmethylether, Tetrahydrofurfurylethylether, 2,5-Dimethoxymethyltetrahydrofuran, 2,5-Diethoxymethyltetrahydrofuran, Furfurylacetat, Tetrahydrofuran-2-carbonsäuremethylester, 1,3-Dioxolan, Tetrahydropyran und/oder Halogenalkane (wie Dichlormethan, 1,2-Dichlorethan, 1,1,2,2-Tetrachlorethan oder deren höhere Homologe).

In einer weiteren Variante wird die reduktive Aminierung in Gegenwart von flüssigem Ammoniak als Lösungsmittel oder mit in einem Lösungsmittel gelöstem Ammoniak durchgeführt.

In einer bevorzugten Ausführungsform des Verfahrens kommt das Olefin-CO-Terpolymer erst innerhalb des Katalysatorbetts des Festbettreaktors mit dem Ammoniak in Kontakt. Auf diese Weise wird verhindert, dass schwerlösliche quervernetzte Imine gebildet werden, die ausfallen können.

Die erhaltenen Polyamine oder Polyamin-Polyalkohole sind besonders gut als Reaktionspartner für Isocyanate und Epoxide, als Edukte für die Phosgenierung zu Polyisocyanaten und für die Herstellung elastischer Beschichtungen oder Formkörper, geeignet. Die Folgeprodukte mit Maleinsäuredialkylestern (Polyaspartate) und mit Ketonen oder Aldehyden (Polyketimine oder Polyaldimine) eignen sich besonders gut als Reaktionspartner für Polyisocyanate.

Schließlich ist auch die Verwendung von erfindungsgemäßen Olefin-CO-Terpolymeren, von erfindungsgemäßen Polyolverbindungen und/oder von erfindungsgemäßen Polyamin- und/oder Polyamin-Polyalkoholverbindungen als Polymeradditive und/oder zur Herstellung von Polyurethan- und/oder Polyharnstoffpolymeren Bestandteil der vorliegenden Erfindung. So können die Terpolymere Verwendung finden als Reaktionspartner für Isocyanate und Epoxide, als Edukte für die Phosgenierung zu Polyisocyanaten und für die Herstellung elastischer Beschichtungen oder Formkörper.

Die vorliegende Erfindung wird anhand der folgenden Beispiele näher erläutert, ohne jedoch darauf beschränkt zu sein.

<u>Beispiele:</u>

Beschreibung der Methoden

Reaktor:

Die Polymerisationsreaktionen wurden in einem 300 mL Edelstahl-Autoklaven mit Glaseinsatz durchgeführt. Das System war mit einem mechanischen Rührer und automatischer interner Kühlung ausgestattet. Die Beheizung erfolgte über eine Heizmanschette und wurde über die Reaktorinnentemperatur gesteuert. Die Katalysatorlösung wurde in einem Schlenkrohr unter Argon hergestellt und mit einer Spritze im Argon-Gegenstrom in eine Gasbürette überführt, welche über ein mit einem Absperrventil ausgestattetes Tauchrohr mit dem Reaktorinnenraum verbunden war. Das Gasgemisch aus gasförmigem Olefin und CO (Angabe der Zusammensetzung in Vol-%) wurde in einer Mischkammer mit einem Volumen von 3,8 L bei einem Druck von 60 bar vorgelegt. Die Gaszufuhr in den Reaktor erfolgte wahlweise über einen Massenflussregler (MFC) der Firma Bronckhorst (Kapazität 2 Normliter/min), der mit einem mit dem Reaktorinnenraum verbundenen Drucksensor gekoppelt war, eine Bypass-Leitung oder die Gasbürette. Die Beaufschlagung des Reaktors mit dem Gasgemisch aus gasförmigem Olefin und CO zu Beginn der Reaktion erfolgte über die Bypass-Leitung. Die Injektion der Katalysatorlösung erfolgte durch Beaufschlagung der Gasbürette mit dem Gasgemisch aus gasförmigem Olefin und CO und Öffnen der Verbindung zum Reaktor. Die Feineinstellung des Gesamtdrucks nach Injektion des Katalysators erfolgte über den MFC. Das Zudosieren des Gasgemisches aus gasförmigem Olefin und CO im Reaktionsverlauf erfolgte über den MFC durch Kompensation des während der Reaktion auftretenden Druckabfalls. Zum Beenden der Reaktion wurde die Gaszufuhr geschlossen und der Autoklav mit Hilfe der internen Kühlung sowie ggf. durch externe Kühlung mit Hilfe eines Eis- oder Wasserbades auf Raumtemperatur abgekühlt.

Folgende Reagenzien und Gase wurden, soweit nicht anders spezifiziert, ohne weitere Aufreinigung eingesetzt:

Ethylen (3.0), Gerling Holz & Co., Hamburg

Kohlenmonoxid CO (3.7), Praxair, Belgien

1-Hexen, CAS [592-41-6], Katalog-Nr. 320323, Aldrich (wurde vor Gebrauch destilliert)

Styrol, CAS [100-42-5], Katalog-Nr. W323306 Aldrich

Palladiumacetat ($Pd(OAc)_2$, CAS [3375-31-3]), Katalog-Nr. 379875, Aldrich

Ligand P^O (2-[Bis(2-methoxyphenyl)phophino]benzolsulfonsäure), CAS [257290-43-0], Convertex

Die Synthese des Komplex-Katalysators [Pd(dcpOEt)P^O] (= [(1-$\eta^2$,5-$\eta^1$-6-Ethoxy-exo-5,6-dihydrodicyclopentadien){2-[bis(2-methoxyphenyl)phophino]benzolsulfonato}palladium]) erfolgte entsprechend Organometallics (2005) 2754, Verbindung 2b.

Als Lösungsmittel wurde Dichlormethan eingesetzt, welches über $CaCl_2$, Molsieb 4Å und F 200 getrocknet und anschließend mit Argon entgast wurde.

Analytik:

$^1$H-NMR-Spektroskopie: Die Messungen erfolgten auf einem Bruker AV300 (300 MHz) bei 95 °C; die Kalibrierung der chemischen Verschiebungen erfolgte relativ zum Lösungsmittelsignal (Chlordeuterobenzol $C_6D_5Cl$, Verschiebung des Tieffeldsignals: δ = 7.14 ppm; 1,2-Dichlordeuterobenzol $C_6D_4Cl_2$, Verschiebung des Tieffeldsignals: δ = 7.19 ppm); s = Singulett, m = Multiplett, bs = verbreitertes Singulett, kb = komplexer Bereich. Die Angabe der Integrale erfolgt relativ zueinander. Die Signale wurden wie folgt zugeordnet (betreffende Gruppe ist unterstrichen):

*Ethylen-CO-Copolymere:*

| δ [ppm] (ungefähre Angabe) | Integral | chem. Gruppe |
|---|---|---|
| 0,7 - 0,95 | A | $-C\underline{H}_3$ |
| 1,0 - 1,5 | B | $-CH_2-C\underline{H}_2-CH_2-$ |
| 1,5 - 1,7 | C | $-CO-CH_2-C\underline{H}_2-CH_2-$ |
| 1,9 - 2,1 | D | $-CH_2-C\underline{H}_2-CH{=}CH_2-$ |
| 2,1 - 2,3 | E | $-CO-C\underline{H}_2-CH_2-CH_2-$ |
| 2,4 - 2,6 | F | $-CO-C\underline{H}_2-C\underline{H}_2-CO-$ |
| 4,9 - 5,1 | G | $-CH{=}C\underline{H}_2$ |
| 5,3 - 5,4 | H | $-C\underline{H}{=}C\underline{H}-$ |
| 5,7 - 5,9 | I | $-C\underline{H}{=}CH_2$ |

Der molare CO-Gehalt $x_{CO}$ (in mol%) errechnet sich aus den Flächenintegralen A bis I wie folgt:

$$x_{CO} = 100\% \times \frac{E+F}{A+B+C+D+2E+2F+G+H+I}$$

Der molare Ethylen-Gehalt $x_{Ethylen}$ (in mol-%) wird berechnet nach:

$$x_{Ethylen} = 100\% - x_{CO}$$

Für Ethylen-CO-Copolymere können die molaren Anteile $x_i$ der Monomere i (Ethylen bzw. CO) den jeweiligen Gewichtsanteilen $y_i$ (in Gew.-%) der Monomere i gleichgesetzt werden.

Das durchschnittliche Molekulargewicht MW errechnet sich unter der Annahme, dass pro Polymerkette eine Doppelbindung vorliegt, nach:

$$MW = \frac{14 \times \frac{A+B+C+D+E+F+G+H+I}{2} + 28 \times \frac{E+F}{4}}{\frac{G+H}{2}}$$

Der Verzweigungsgrad VG wird nach Formel (II) berechnet, wobei

$$n_{EG,Mol} = \frac{\frac{A}{3} + \frac{G}{2}}{\frac{G+H}{2}}$$

und

$$n_{C,Mol} = \frac{\frac{A+B+C+D+E+F+G+H+I}{2} + \frac{E+F}{4}}{\frac{G+H}{2}}$$

*Ethylen-CO-1-Hexen-Terpolymere:*

| δ [ppm] (ungefähre Angabe) | Integral | chem. Gruppe |
|---|---|---|
| 0,7 - 1,0 | A' | $-C\underline{H}_3$ |
| 1,0 - 1,5 | B' | $-CH_2-C\underline{H}_2-CH_2-$ |
| 1,5 - 1,7 | C' | $-CO-CH_2-C\underline{H}_2-CH_2$ / $-CH_2C\underline{H}(^nBu)CH_2-$ |
| 1,9 - 2,1 | D' | $-CH_2-C\underline{H}_2-CH=CH_2$ / $-CH_2-C\underline{H}_2-CH=CH-$ |
| 2,1 - 2,3 | E' | $-CO-C\underline{H}_2-CH_2-CH_2-$ |
| 2,4 - 2,6 | F' | $-CO-C\underline{H}_2-C\underline{H}_2-CO-$ |
| 4,75 | G' | $-CH_2-C(^nBu)=C\underline{H}H'$ |
| 4,9 - 5,1 | H' | $-CH=C\underline{H}_2$ / $-C(^nBu)=CH\underline{H'}$ |
| 5,3 - 5,5 | I' | $-C\underline{H}=C\underline{H}-$ |
| 5,7 - 5,9 | J' | $-C\underline{H}=CH_2$ |

Die Gewichtsanteile $y_i$ der einzelnen Monomer i (Ethylen, CO und 1-Hexen) errechnen sich aus den Integralen A' bis J' wie folgt:

$$y_{1-Hexen} = 100\% \times \frac{84 \times \left(\frac{A'}{3} - \frac{G'+H'}{2}\right)}{14 \times \frac{A'+B'+C'+D'+E'+F'+G'+H'+I'+J'}{2} + 28 \times \frac{E'+F'}{4}}$$

$$y_{CO} = 100\% \times \frac{28 \times \frac{E'+F'}{4}}{14 \times \frac{A'+B'+C'+D'+E'+F'+G'+H'+I'+J'}{2} + 28 \times \frac{E'+F'}{4}}$$

$$y_{Ethylen} = 100\% - y_{1-Hexen} - y_{CO}$$

Die Stoffmengenanteile $x_i$ der einzelnen Monomere i (Ethylen, CO und 1-Hexen) errechnen sich aus den Gewichtsanteilen $y_i$ mit $M_{Ethylen}$ = 28 g/mol, $M_{CO}$ = 28 g/mol und $M_{1\text{-}Hexen}$ = 84 g/mol wie folgt:

$$x_i = \frac{y_i / M_i}{\sum_i y_i / M_i}$$

Das durchschnittliche Molekulargewicht MW errechnet sich unter der Annahme, dass pro Polymerkette eine

Doppelbindung vorliegt, nach:

$$MW = \frac{14 \times \frac{A'+B'+C'+D'+E'+F'+G'+H'+I'+J'}{2} + 28 \times \frac{E'+F'}{4}}{\frac{G'+H'}{2} + \frac{I'}{2}}$$

Der Verzweigungsgrad VG wird nach Formel (II) berechnet, wobei

$$n_{EG,Mol} = \frac{\frac{A'}{3} + \frac{G'+H'}{2}}{\frac{G'+H'}{2} + \frac{I'}{2}}$$

und

$$n_{C,Mol} = \frac{\frac{A'+B'+C'+D'+E'+F'+G'+H'+I'+J'}{2} + \frac{E'+F'}{4}}{\frac{G'+H'}{2} + \frac{I'}{2}}$$

*Ethylen-CO-Styrol-Terpolymere:*

Die Kalibrierung der chemischen Verschiebung erfolgte anhand des Maximums des Methylen-Signals mit dem Integral B" ($-CH_2-C\underline{H}_2-CH_2-$), $\delta$ = 1,37 ppm.

| $\delta$ [ppm] (ungefähre Angabe) | Integral | chem. Gruppe |
|---|---|---|
| 0,7 - 1,0 | A" | $-C\underline{H}_3$ |
| 1,0 - 1,5 | B" | $-CH_2-C\underline{H}_2-CH_2-$ |
| 1,5 - 1,7 | C" | $-CO-CH_2-C\underline{H}_2-CH_2-$ |
| 1,9 - 2,1 | D" | $-CH_2-C\underline{H}_2-CH=CH_2$ / $-CH_2-C\underline{H}_2-CH=CH-$ |
| 2,1 - 2,3 | E" | $-CO-C\underline{H}_2-CH_2-CH_2-$ |
| 2,4 - 2,6 | F" | $-CO-C\underline{H}_2-C\underline{H}_2-CO-$ |
| 2,6 - 2,8 | $S_1$ | $-CH_2-C\underline{H}Ph-CH_2-$ |
| 4,9 - 5,1 | H" | $-CH=C\underline{H}_2$ |
| 5,3 - 5,5 | I" | -CH=CH- |
| 5,7 - 5,9 | J" | $-C\underline{H}=CH_2$ |
| 6,0 - 6.3 | $S_2$ | -CH=CH-Ph |
| 6.4 - 6.5 | $S_3$ | -CH=CH-Ph |
| 6,5 - 6,8 | | $C\underline{H}_{ar}$ |
| 6,9 - 7,6 | | $C\underline{H}_{ar}$ |

Die Signale der $CH_{ar}$-Gruppen überlappen mit den Signalen des Lösungsmittels ($C_6D_5Cl$), deshalb können die Integrale dieser Signale nicht zur Bestimmung des Styrol-Gehaltes herangezogen werden. Die Bestimmung des Styrol-Gehaltes erfolgte deshalb über die Integrale $S_1$, $S_2$ und $S_3$.

Die Gewichtsanteile $y_i$ der einzelnen Monomere i (Ethylen, CO und Styrol) errechnen sich aus den Integralen A" bis J" und $S_1$ bis $S_3$ wie folgt:

$$y_{Styrol} = 100\% \times \frac{104 \times (S_1 + S_3)}{15 \times \frac{A''}{3} + 14 \times \frac{B''+C''+D''+E''+F''+H''}{2} + 13 \times (I''+J''+S_2) + 90 \times (S_1 + S_3) + 28 \times \frac{E''+F''}{4}}$$

$$y_{CO} = 100\% \times \frac{28 \times \frac{E''+F''}{4}}{15 \times \frac{A''}{3} + 14 \times \frac{B''+C''+D''+E''+F''+H''}{2} + 13 \times (I''+J''+S_2) + 90 \times (S_1 + S_3) + 28 \times \frac{E''+F''}{4}}$$

$$y_{Ethylen} = 100\% \times \frac{14 \times \frac{A''+B''+C''+D''+E''+F''+H''+I''+J''-2 \times S_1}{2}}{15 \times \frac{A''}{3} + 14 \times \frac{B''+C''+D''+E''+F''+H''}{2} + 13 \times (I''+J''+S_2) + 90 \times (S_1 + S_3) + 28 \times \frac{E''+F''}{4}}$$

Die Stoffmengenanteile $x_i$ der einzelnen Monomere i (Ethylen, CO und Styrol) errechnen sich aus den Gewichtsanteilen $y_i$ mit $M_{Ethylen}$ = 28 g/mol, $M_{CO}$ = 28 g/mol und $M_{Styrol}$ = 104 g/mol wie folgt:

$$x_i = \frac{y_i / M_i}{\sum_i y_i / M_i}$$

Das durchschnittliche Molekulargewicht MW errechnet sich unter der Annahme, dass pro Polymerkette eine Doppelbindung vorliegt, nach:

$$MW = \frac{15 \times \frac{A''}{3} + 14 \times \frac{B''+C''+D''+E''+F''+H''}{2} + 13 \times (I''+J''+S_2) + 90 \times (S_1 + S_3) + 28 \times \frac{E''+F''}{4}}{\frac{H''+I''}{2} + S_3}$$

Der Verzweigungsgrad VG wird nach Formel (II) berechnet, wobei

$$n_{EG,Mol} = \frac{\frac{A''}{3} + S_1 + \frac{H''}{2} + S_3}{\frac{H''}{2} + \frac{I''}{2} + S_3}$$

und

$$n_{C,Mol} = \frac{\frac{A''}{3} + \frac{B''+C''+D''+E''+F''+H''}{2} + S_1 + I''+J''+S_2 + S_3}{\frac{H''}{2} + \frac{I''}{2} + S_3}$$

*Ethylen-CO-1-Hexen-Terpolymere,*

*erhalten durch radikalische Terpolymerisation mit Azobisisobutyronitril (AIBN) als Radikalstarter (entsprechend Vergleichsbeispiel 3).*

| δ [ppm] (ungefähre Angabe) | Integral | chem. Gruppe |
|---|---|---|
| 0,5 - 1,0 | A'* | -C<u>H</u>$_3$ |
| 1,0 - 1,4 | B'* | $-CH_2$-C<u>H</u>$_2$-$CH_2-$ |
| 1,4 - 2,1 | C'* | -CO-$CH_2$-C<u>H</u>$_2$-$CH_2$ / -$CH_2$C<u>H</u>($^n$Bu)$CH_2$- / -C(C<u>H</u>$_3$)$_2$CN |
| 2,1 - 2,5 | E'* | -CO-C<u>H</u>$_2$-$CH_2$-$CH_2$- |
| 2,5 - 2,8 | F'* | -CO-C<u>H</u>$_2$-C<u>H</u>$_2$-CO- |

Die durch radikalische Terpolymerisation mit AIBN erhaltenen Terpolymere weisen neben den aus den Monomeren Ethylen, 1-Hexen und CO hervorgehenden chemischen Gruppen zusätzlich aus dem AIBN hervorgehende Isobutyronitril-Gruppen $-C(CH_3)_2CN$ (hier bezeichnet als IBN) als Endgruppen auf. Die Signale für die in den IBN-Gruppen enthaltenen Methyl-Gruppen überlappen mit den Signalen für die $CH_2$-Gruppen in β-Stellung zu CO-Gruppen sowie den Signalen für die verzweigenden, aus 1-Hexen hervorgehenden -CH($^n$Bu)- Gruppen und müssen in den folgenden Berechnungen für die Monomer-Gehalte und den Verzweigungsgrad berücksichtigt werden. Der Anteil an IBN-Gruppen im Integral C'* ist $I_{IBN}$ = C'*- E'* - A'*/3.

Die Gewichtsanteile $y_i$ der einzelnen Monomere i (Ethylen, CO, 1-Hexen, IBN) errechnen sich aus den Integralen A'* bis D'* sowie E'* und F'* wie folgt:

$$y_{1-Hexen} = 100\% \times \frac{84 \times \frac{A'*}{3}}{14 \times \frac{A'* + B'* + C'* + E'* + F'* - (C'* - E'* - A'*/3)}{2} + 68 \times \frac{C'* - E'* - A'*/3}{6} + 28 \times \frac{E'+F'}{4}}$$

$$y_{CO} = 100\% \times \frac{28 \times \frac{E'* + F'*}{4}}{14 \times \frac{A'* + B'* + C'* + E'* + F'* - (C'* - E'* - A'*/3)}{2} + 68 \times \frac{C'* - E'* - A'*/3}{6} + 28 \times \frac{E'+F'}{4}}$$

$$y_{Ethylen} = 100\% \times \frac{14 \times \frac{A'* + B'* + C'* + E'* + F'* - (C'* - E'* - A'*/3)}{2} - 84 \times \frac{A'*}{3}}{14 \times \frac{A'* + B'* + C'* + E'* + F'* - (C'* - E'* - A'*/3)}{2} + 68 \times \frac{C'* - E'* - A'*/3}{6} + 28 \times \frac{E'+F'}{4}}$$

$$y_{IBN} = 100\% \times \frac{68 \times \frac{C'* - E'* - A'*/3}{6}}{14 \times \frac{A'* + B'* + C'* + E'* + F'* - (C'* - E'* - A'*/3)}{2} + 68 \times \frac{C'* - E'* - A'*/3}{6} + 28 \times \frac{E'+F'}{4}}$$

Die Gewichtsanteile $y_{EG}$ der einzelnen Endgruppen EG ($-CH_3$ und IBN) errechnen sich aus den Integralen A'* bis D'* sowie E'* und F'* wie folgt:

$$y_{-CH3} = 100\% \times \frac{15 \times \frac{A'^*}{3}}{14 \times \frac{A'^* + B'^* + C'^* + E'^* + F'^* - (C'^* - E'^* - A'^*/3)}{2} + 68 \times \frac{C'^* - E'^* - A'^*/3}{6} + 28 \times \frac{E' + F'}{4}}$$

$$y_{IBN} = 100\% \times \frac{68 \times \frac{C'^* - E'^* - A'^*/3}{6}}{14 \times \frac{A'^* + B'^* + C'^* + E'^* + F'^* - (C'^* - E'^* - A'^*/3)}{2} + 68 \times \frac{C'^* - E'^* - A'^*/3}{6} + 28 \times \frac{E' + F'}{4}}$$

Die Stoffmengenanteile $x_i$ der einzelnen Monomere i (Ethylen, CO, 1-Hexen, IBN) errechnen sich aus den Gewichtsanteilen $y_i$ mit $M_{Ethylen}$ = 28 g/mol, $M_{CO}$ = 28 g/mol und $M_{1\text{-}Hexen}$ = 84 g/mol wie folgt:

$$x_i = \frac{y_i / M_i}{\sum_i y_i / M_i}$$

Der Verzweigungsgrad VG wird nach Formel (II) berechnet, wobei

$$n_{EG,Mol} = M_n \times \left( \frac{y_{-CH3}}{15 g/mol} + \frac{y_{IBN}}{68 g/mol} \right)$$

und

$$n_{C,Mol} = M_n \times \sum_i \frac{y_i \times n_{C,i}}{M_i},$$

wobei $M_n$ für das per Gel-Permeations-Chromatographie (GPC) bestimmte zahlenmittlere Molekulargewicht, $y_i$ für den Gewichtsanteil der einzelnen Monomere i (Ethylen, CO, 1-Hexen, IBN), $n_{C,\,i}$ für die Anzahl der in einem Molekül i enthaltenen C-Atome (2 für Ethylen, 1 für CO, 6 für 1-Hexen, 4 für IBN) und M; für die molare Masse der Monomere i (28 g/mol für Ethylen, 28 g/mol für CO, 84 g/mol für 1-Hexen, 68 g/mol für IBN) steht.

Infrarot (IR)-Spektroskopie: Die Messungen erfolgten auf einem Bruker Alpha-P FT-IR-Spektrometer; die Messungen erfolgten in Reinsubstanz; angegeben ist die Wellenzahl des Maximums des Signales für die CO-Streckschwingung v(CO).

Die Bestimmung der Viskosität erfolgte auf einem Physica MCR 501 Rheomether der Fa. Anton Paar. Es wurde eine Kegel-Platte-Konfiguration mit einem Abstand von 50 μm gewählt (Messsystem DCP25). 0,1 g der Substanz wurde auf der Rheometerplatte aufgebracht und bei 160 °C einer Scherung von 0,01 bis 1000 1/s unterworfen und für 10 min alle 10 s die Viskosität gemessen. Angegeben ist die über alle Messpunkte gemittelte Viskosität.

Die Bestimmung der Schmelzpunkte erfolgte per DSC (Differential Scanning Calorimetry) auf einem DSC 1 STAR$^e$ der Firma Mettler Toledo. Die Probe wurde bei einer Heizrate von 10 K/min über zwei Heizzyklen von -80 °C bis + 250 °C vermessen. Als Schmelzpunkt wurde das Wärmeabsorptionsmaximum der zweiten Aufheizrate angegeben.

Gel-Permeations-Chromatographie (GPC): Das Molekulargewicht wurde per Hochtemperatur-GPC bei der Firma Polymer Standards Services (PSS), Mainz, bestimmt. Die Analyse wurde bei 150 °C in 1,2,4-Trichlorbenzol als Eluenten bei einer Flussrate von 1,0 ml/min durchgeführt. Säule: PSS Polyolefin 10 μm, LinXL, ID 8,0 mm × 300 mm. Als Kalibrierstandard wurden Polystyrolproben bekannten Molekulargewichts verwendet.

<u>Beispiel 1:</u>

Terpolymerisation von Ethylen, CO und 1-Hexen bei einer Reaktionszeit von 2 Stunden

In einem 300 mL Druckreaktor aus Edelstahl mit Glaseinsatz wurde ein Gemisch aus 50 mL Dichlormethan und 50 ml frisch destilliertem 1-Hexen vorgelegt und der Reaktor mit Argon geflutet. Anschließend wurde der Reaktor bei Raumtemperatur mit einem Gemisch aus 98% Ethylen und 2% CO auf einen Gesamtdruck von 10,2 bar beaufschlagt. Das Gemisch wurde dann unter Rühren bei 500 U/min auf 110 °C erhitzt, wobei der Gesamtdruck im Reaktor auf 17,4 bar anstieg. Nach Erreichen der Reaktionstemperatur wurde der Druck mit einem Gemisch aus 98% Ethylen und 2% CO auf 30,3 bar eingestellt. Dann wurden 14,4 mg (0,02 mmol) [Pd(dcpOEt)P^O] in 5 mL Dichlormethan gelöst und über eine Druckbürette mit Hilfe eines Gasgemischs aus 98% Ethylen und 2% CO in das Reaktionsgemisch injiziert. Anschließend wurde der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, 2 Stunden bei 110 °C gerührt. Nach abgeschlossener Reaktionszeit wurde der Reaktor auf 25 °C heruntergekühlt und der Druck vorsichtig abgelassen. Das erhaltene Reaktionsgemisch wurde vorsichtig filtriert und der feste Rückstand mit Dichlormethan gewaschen. Anschließend wurde der Rückstand bei 60 °C 24 Stunden am Hochvakuum bei ca. 0,02 mbar getrocknet.

Es wurden 22,5 g eines Terpolymers aus Ethylen, CO und 1-Hexen erhalten.

Schmelzpunkt: 109,91 °C.

Der Schmelzbereich beginnt bereits bei < 25 °C.

Viskosität in Pa·s (Temperatur): 0.613 (110 °C), 0.493 (120 °C), 0.404 (130 °C), 0.332 (140 °C), 0.273 (150 °C), 0.229 (160 °C).

IR: $\nu$(CO) = 1715 $cm^{-1}$

$^1$H-NMR (300 MHz, $C_6D_5Cl$, 95 °C): $\delta$ = 0.76-1.02 (35.48 H), 1.02-1.45 (964.501 H), 1.45-1.70 (19.38 H), 1.89-2.10 (7.871 H), 2.14-2.34 (9.878 H), 2.40-2.60 (2.293 H), 4,75 (bs, 0.453 H), 4.86-5.03 (2.464 H), 5.32-5.47 (1.628 H), 5.69-5.86 (1.000 H) ppm.

Die molaren Anteile der Monomere im Produkt betragen 94,5 mol% Ethylen, 4,3 mol% 1-Hexen und 1,3 mol% CO.

Aus dem Anteil an Doppelbindungen errechnet sich aus dem $^1$H-NMR-Spektrum ein durchschnittliches Molekulargewicht von $M_n$ = 3256 g/mol.

Der Verzweigungsgrad betrug VG = 16,63 Verzweigungen pro 1000 C-Atome.

Laut GPC (150 °C, 1,2,4-Trichlorbenzol, kalibriert gegen Polystyrol) weist das Produkt ein zahlenmittleres Molekulargewicht $M_n$ = 3770 g/mol und einen Polydispersitätsindex PDI = 2,53 auf.

Beispiel 2:

Terpolymerisation von Ethylen, CO und 1-Hexen bei einem Gasumsatz von 2,5 Normliter

In einem 300 mL Druckreaktor aus Edelstahl mit Glaseinsatz wurde ein Gemisch aus 50 mL Dichlormethan und 50 ml frisch destilliertem 1-Hexen vorgelegt und der Reaktor mit Argon geflutet. Anschließend wurde der Reaktor bei Raumtemperatur mit einem Gemisch aus 98% Ethylen und 2% CO auf einen Gesamtdruck von 10 bar beaufschlagt. Das Gemisch wurde dann unter Rühren bei 500 U/min auf 110 °C erhitzt. Nach Erreichen der Reaktionstemperatur wurde der Druck mit einem Gemisch aus 98% Ethylen und 2% CO auf 30 bar eingestellt. Dann wurden 14,3 mg (0,021 mmol)

[Pd(dcpOEt)P^O] in 5 mL Dichlormethan gelöst und über eine Druckbürette mit Hilfe eines Gasgemischs aus 98% Ethylen und 2% CO in das Reaktionsgemisch injiziert. Anschließend wurde der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, bei 110 °C gerührt, bis 2,5 Normliter des Gasgemisches zudosiert waren (0,42 Stunden). Nach abgeschlossener Reaktionszeit wurde der Reaktor auf 25 °C heruntergekühlt und der Druck vorsichtig abgelassen. Das erhaltene Reaktionsgemisch wurde vorsichtig filtriert und der feste Rückstand mit Dichlormethan gewaschen. Anschließend wurde der Rückstand bei 60 °C 24 Stunden am Hochvakuum bei ca. 0,02 mbar getrocknet.

Es wurden 3,8 g eines Terpolymers aus Ethylen, CO und 1-Hexen erhalten.

Schmelzpunkt: 112,43 °C

Der Schmelzbereich beginnt bereits bei < 50 °C.

Viskosität in Pa·s (Temperatur): 0.875 (110 °C), 0.685 (120 °C), 0.546 (130 °C), 0.443 (140 °C), 0.363 (150 °C), 0.301 (160 °C).

IR: $\nu$(CO) = 1711 $cm^{-1}$ $^1$H-NMR (300 MHz, $C_6D_5Cl$, 95 °C): $\delta$ = 0.76-1.02 (26,48 H), 1.02-1.45 (767,337 H), 1.45-1.70 (24,91 H), 1.89-2.10 (5,845 H), 2.14-2.34 (15,47 H), 2.40-2.60 (7,287 H), 4,75 (bs, 0,343 H), 4.86-5.03 (2,074 H), 5.32-5.47 (1,315 H), 5.69-5.86 (0,999 H) ppm.

Die molaren Anteile der Monomere im Produkt betragen 93,5 mol% Ethylen, 3,7 mol% 1-Hexen und 2,8 mol% CO.

Aus dem Anteil an Doppelbindungen errechnet sich aus dem $^1$H-NMR-Spektrum ein durchschnittliches Mole-

kulargewicht von $M_n$ = 3282 g/mol.

Der Verzweigungsgrad betrug VG = 14,60 Verzweigungen pro 1000 C-Atome.

Laut GPC (150 °C, 1,2,4-Trichlorbenzol, kalibriert gegen Polystyrol) weist das Produkt ein zahlenmittleres Molekulargewicht $M_n$ = 4580 g/mol und einen Polydispersitätsindex PDI = 2,41 auf.

Beispiel 3:

Terpolymerisation von Ethylen, CO und Styrol bei einer Reaktionszeit von 2 Stunden

In einem 300 mL Druckreaktor aus Edelstahl mit Glaseinsatz wurde ein Gemisch aus 50 mL Dichlormethan und 50 ml Styrol vorgelegt und der Reaktor mit Argon geflutet. Anschließend wurde der Reaktor bei Raumtemperatur mit einem Gemisch aus 98% Ethylen und 2% CO auf einen Gesamtdruck von 12 bar beaufschlagt. Das Gemisch wurde dann unter Rühren bei 500 U/min auf 110 °C erhitzt. Nach Erreichen der Reaktionstemperatur wurde der Druck mit einem Gemisch aus 98% Ethylen und 2% CO auf 30 bar eingestellt. Dann wurden 14,4 mg (0,021 mmol) [Pd(dcpOEt)P^O] in 5 mL Dichlormethan gelöst und über eine Druckbürette mit Hilfe eines Gasgemischs aus 98% Ethylen und 2% CO in das Reaktionsgemisch injiziert. Anschließend wurde der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, 2 Stunden bei 110 °C gerührt. Nach abgeschlossener Reaktionszeit wurde der Reaktor auf 25 °C heruntergekühlt und der Druck vorsichtig abgelassen. Das erhaltene Reaktionsgemisch wurde vorsichtig filtriert und der feste Rückstand mit Dichlormethan gewaschen. Anschließend wurde der Rückstand bei 60 °C 24 Stunden am Hochvakuum bei ca. 0,02 mbar getrocknet.

Es wurden 15,4 g eines Terpolymers aus Ethylen, CO und Styrol erhalten.

IR: $\nu$(CO) = 1717 $cm^{-1}$

$^1$H-NMR (300 MHz, $C_6D_5Cl$, 95 °C): $\delta$ = 0,68-1,06 (4,997 H), 1,06-1,49 (336,70 H), 1,49-1,86 (23,88 H), 1,93-2,15 (3,492 H), 2,15-2,41 (10,83 H), 2,63-2,78 (4,795 H), 2,78-2,89 (1,200 H), 4,92-5,11 (1,000 H), 5,43-5,75 (0,227 H), 5,75-5,91 (0,459 H), 6,08-6,30 (1,226 H), 6,30-6,48 (1,304 H), 6,84-6,89 (6,568 H), 6,89-7,58 (37,77 H) ppm.

Die molaren Anteile der Monomere im Produkt betragen 93,5 mol% Ethylen, 2,5 mol% Styrol und 3,8 mol% CO.

Aus dem Anteil an Doppelbindungen errechnet sich aus dem $^1$H-NMR-Spektrum ein durchschnittliches Molekulargewicht von $M_n$ = 1590 g/mol.

Der Verzweigungsgrad betrug VG = 3,88 Verzweigungen pro 1000 C-Atome.

Schmelzpunkt: 112,54 °C

Der Schmelzbereich beginnt bereits bei < 60 °C.

Viskosität in Pa·s (Temperatur):1.269 (110 °C), 1.021 (120 °C), 0.8791 (130 °C), 0.7344 (140 °C), 0.6906 (150 °C), 0.5585 (160 °C).

Laut GPC (150 °C, 1,2,4-Trichlorbenzol, kalibriert gegen Polystyrol) weist das Produkt ein zahlenmittleres Molekulargewicht $M_n$ = 3870 g/mol und einen Polydispersitätsindex PDI = 1,45 auf.

Beispiel 4:

Terpolymerisation von Ethylen, CO und Styrol bei einem Gasumsatz von 2,5 Normliter

In einem 300 mL Druckreaktor aus Edelstahl mit Glaseinsatz wurde ein Gemisch aus 50 mL Dichlormethan und 50 ml Styrol vorgelegt und der Reaktor mit Argon geflutet. Anschließend wurde der Reaktor bei Raumtemperatur mit einem Gemisch aus 98% Ethylen und 2% CO auf einen Gesamtdruck von 11,7 bar beaufschlagt. Das Gemisch wurde dann unter Rühren bei 500 U/min auf 110 °C erhitzt. Nach Erreichen der Reaktionstemperatur wurde der Druck mit einem Gemisch aus 98% Ethylen und 2% CO auf 30 bar eingestellt. Dann wurden 14,5 mg (0,021 mmol) [Pd(dcpOEt)P^O] in 5 mL Dichlormethan gelöst und über eine Druckbürette mit Hilfe eines Gasgemischs aus 98% Ethylen und 2% CO in das Reaktionsgemisch injiziert. Anschließend wurde der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, bei 110 °C gerührt, bis 2,5 Normliter des Gasgemisches zudosiert waren (0,65 Stunden). Nach abgeschlossener Reaktionszeit wurde der Reaktor auf 25 °C heruntergekühlt und der Druck vorsichtig abgelassen. Das erhaltene Reaktionsgemisch wurde vorsichtig filtriert und der feste Rückstand mit Dichlormethan gewaschen. Die flüchtigen Bestandteile des Filtrats wurden destillativ unter vermindertem Druck entfernt. Es wurden 3.5 g eines Terpolymers aus Ethylen, CO und Styrol erhalten.

Schmelzpunkt: 112,68 °C

Der Schmelzbereich beginnt bereits bei < 60 °C.

Viskosität in Pa·s (Temperatur):0.6902 (110 °C), 0.573 (120 °C), 0.4704 (130 °C), 0.3942 (140 °C), 0.3303 (150 °C), 0.323 (160 °C).

IR: $\nu$(CO) = 1716 $cm^{-1}$

$^1$H-NMR (300 MHz, $C_6D_5Cl$, 95 °C): $\delta$ = 0,73-1,03 (5,347 H), 1,03-1,52 (447,19 H), 1,52-1,82 (26,68 H), 1,94-2,13

(2,564 H), 2,13-2,41 (15,48 H), 2,41-2,61 (4,241 H), 2,61-2,77 (1,264 H), 4,90-5,09 (0,999 H), 5,42-5,50 (0,0863 H), 5,73-5,91 (0,467 H), 6,11-6,27 (1,120 H), 6,32-6,47 (1,171 H), 6,47-6,82 (3,522 H), 6,89-7,58 (37,04 H) ppm.

Die molaren Anteile der Monomere im Produkt betragen 94,5 mol% Ethylen, 1,8 mol% Styrol und 3,7 mol% CO.

Aus dem Anteil an Doppelbindungen errechnet sich aus dem $^1$H-NMR-Spektrum ein durchschnittliches Molekulargewicht von $M_n$ = 2261 g/mol.

Der Verzweigungsgrad betrug VG = 4,71 Verzweigungen pro 1000 C-Atome.

Laut GPC (150 °C, 1,2,4-Trichlorbenzol, kalibriert gegen Polystyrol) weist das Produkt ein zahlenmittleres Molekulargewicht $M_n$ = 3420 g/mol und einen Polydispersitätsindex PDI = 1,63 auf.

<u>Vergleichsbeispiel 1:</u>

Copolymerisation von Ethylen und CO bei einer Reaktionszeit von 2 Stunden

In einem 300 mL Druckreaktor aus Edelstahl mit Glaseinsatz wurden 100 mL Dichlormethan vorgelegt und der Reaktor mit Argon geflutet. Anschließend wurde der Reaktor bei Raumtemperatur mit einem Gemisch aus 98% Ethylen und 2% CO auf einen Gesamtdruck von 21 bar beaufschlagt. Das Gemisch wurde dann unter Rühren bei 500 U/min auf 110 °C erhitzt, wobei der Gesamtdruck im Reaktor auf 17,4 bar anstieg. Nach Erreichen der Reaktionstemperatur wurde der Druck mit einem Gemisch aus 98% Ethylen und 2% CO auf 34 bar eingestellt. Dann wurden 14,4 mg (0,021 mmol) [Pd(dcpOEt)P^O] in 5 mL Dichlormethan gelöst und über eine Druckbürette mit Hilfe eines Gasgemischs aus 98% Ethylen und 2% CO in das Reaktionsgemisch injiziert. Anschließend wurde der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, 2 Stunden bei 110 °C gerührt. Nach abgeschlossener Reaktionszeit wurde der Reaktor auf 25 °C heruntergekühlt und der Druck vorsichtig abgelassen. Das erhaltene Reaktionsgemisch wurde vorsichtig filtriert und der feste Rückstand mit Dichlormethan gewaschen. Anschließend wurde der Rückstand bei 60 °C 24 Stunden am Hochvakuum bei ca. 0,02 mbar getrocknet.

Es wurden 13,8 g eines Copolymers aus Ethylen und CO erhalten.

Schmelzpunkt: 126,13 °C

Viskosität in Pa·s (Temperatur):

1.463 (120 °C), 1.191 (130 °C), 0.9778 (140 °C), 0.8143 (150 °C), 0.6687 (160 °C).

Bei 110 °C lag die Probe im festen Zustand vor. Eine Viskositätsmessung war daher bei dieser Temperatur nicht möglich.

IR: $\nu$(CO) = 1712 $cm^{-1}$

$^1$H-NMR (300 MHz, $C_6D_4Cl_2$, 95 °C): $\delta$ = 0,77-0,93 (9,156 H), 0,93-1,41 (990,10 H), 1,41-1,67 (29,41 H), 1,87-2,06 (3,637 H), 2,16-2,37 (20,96 H), 2,44-2,64 (8,537 H), 4,83-5,00 (2,567 H), 5,30-5,43 (0,226 H), 5,65-5,83 (1,002 H) ppm.

Die molaren Anteile der Monomere im Produkt betragen 97,3 mol% Ethylen und 2,7 mol% CO.

Aus dem Anteil an Doppelbindungen errechnet sich aus dem $^1$H-NMR-Spektrum ein durchschnittliches Molekulargewicht von $M_n$ = 5489 g/mol.

Laut GPC (150 °C, 1,2,4-Trichlorbenzol, kalibriert gegen Polystyrol) weist das Produkt ein zahlenmittleres Molekulargewicht $M_n$ = 6440 g/mol und einen Polydispersitätsindex PDI = 2.28 auf.

*Vergleich:*

Der Vergleich von Vergleichsbeispiel 1 (Ethylen-CO-Copolymer) zu Beispiel 1 (Ethylen-1-Hexen-CO-Terpolymer) und Beispiel 3 (Ethylen-Styrol-CO-Terpolymer) zeigt eindeutig, dass in Abwesenheit eines zweiten Olefins unter anderweitig gleichen Reaktionsbedingungen (Gaszusammensetzung, Druck, Temperatur, Reaktionszeit) ein Polymer erhalten wird, welches einen höheren Schmelzpunkt, bei gleichen Temperaturen höhere Schmelzviskositäten sowie ein höheres zahlenmittleres Molekulargewicht aufweist.

<u>Vergleichsbeispiel 2:</u>

Copolymerisation von Ethylen und CO bei einem Gasumsatz von 2,5 Normliter

In einem 300 mL Druckreaktor aus Edelstahl mit Glaseinsatz wurden 100 mL Dichlormethan vorgelegt und der Reaktor mit Argon geflutet. Anschließend wurde der Reaktor bei Raumtemperatur mit einem Gemisch aus 98% Ethylen und 2% CO auf einen Gesamtdruck von 11,6 bar beaufschlagt. Das Gemisch wurde dann unter Rühren bei 500 U/min

auf 110 °C erhitzt. Nach Erreichen der Reaktionstemperatur wurde der Druck mit einem Gemisch aus 98% Ethylen und 2% CO auf 27,8 bar eingestellt. Dann wurden 14,3 mg (0,021 mmol) [Pd(dcpOEt)P^O] in 3 mL Dichlormethan gelöst und über eine Druckbürette mit Hilfe eines Gasgemischs aus 98% Ethylen und 2% CO in das Reaktionsgemisch injiziert. Anschließend wurde der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, bei 110 °C gerührt, bis 2,5 Normliter des Gasgemisches zudosiert waren (0,85 Stunden). Nach abgeschlossener Reaktionszeit wurde der Reaktor auf 25 °C heruntergekühlt und der Druck vorsichtig abgelassen. Das erhaltene Reaktionsgemisch wurde vorsichtig filtriert und der feste Rückstand mit Dichlormethan gewaschen. Anschließend wurde der Rückstand bei 60 °C 24 Stunden am Hochvakuum bei ca. 0,02 mbar getrocknet.

Es wurden 2,8 g eines Copolymers aus Ethylen und CO erhalten.

Schmelzpunkt: 126,16 °C

Viskosität in Pa·s (Temperatur):

2.3 (120 °C), 1.98 (130 °C), 1.652 (140 °C), 1.302 (150 °C), 0.778 (160 °C).

Bei 110 °C lag die Probe im festen Zustand vor. Eine Viskositätsmessung war daher bei dieser Temperatur nicht möglich.

IR: $\nu$(CO) = 1709 $cm^{-1}$

$^1$H-NMR (300 MHz, $C_6D_4Cl_2$, 95 °C): $\delta$ = 0,67-0,91 (15,10 H), 0,91-1,42 (1540,40 H), 1,86-2,10 (5,901 H), 2,10-2,41 (74,89 H), 2,41-2,77 (25,68 H), 4,83-5,01 (2,009 H), 5,24-5,48 (2,495 H), 5,65-5,85 (0,999 H) ppm.

Die molaren Anteile der Monomere im Produkt betragen 94,58 mol% Ethylen und 5,42 mol% CO.

Aus dem Anteil an Doppelbindungen errechnet sich aus dem $^1$H-NMR-Spektrum ein durchschnittliches Molekulargewicht von $M_n$ = 5769 g/mol.

*Vergleich:*

Der Vergleich von Vergleichsbeispiel 2 (Ethylen-CO-Copolymer) zu Beispiel 2 (Ethylen-1-Hexen-CO-Terpolymer) und Beispiel 4 (Ethylen-Styrol-CO-Terpolymer) zeigt eindeutig, dass in Abwesenheit eines zweiten Olefins unter anderweitig gleichen Reaktionsbedingungen (gleiche Gaszusammensetzung, Druck, Temperatur, gleicher Gasumsatz) ein Polymer erhalten wird, welches einen höheren Schmelzpunkt, bei gleichen Temperaturen höhere Schmelzviskositäten sowie ein höheres zahlenmittleres Molekulargewicht aufweist.

Vergleichsbeispiel 3:

Radikalische Terpolymerisation von Ethylen, CO und 1-Hexen mit AIBN als Radikalstarter

entsprechend Beispiel 1 aus WO 2011/110535 A2

In einem 200 ml Druckreaktor wurden 50 ml Hexen, 50 ml Methylcyclohexan und 1 g AIBN vorgelegt. Es wurden 50 bar Ethylen, 10 bar Kohlenmonoxid und 20 bar Wasserstoff aufgepresst und die Mischung 18 h lang auf 80 °C erhitzt. Das Produkt wurde nach Filtration und Entfernen der flüchtigen Bestandteile am Rotationsverdampfer als farbloses bis gelbes Öl erhalten.

Experiment 1

Ausbeute: 5,3 g

Laut GPC (Tetrahydrofuran, kalibriert gegen Polystyrol) wies das Produkt ein zahlenmittleres Molekulargewicht $M_n$ = 1301 g/mol und einen Polydispersitätsindex PDI = 1,75 auf.

Per Elementaranalyse wurde ein Stickstoff-Gehalt von 2,91 % ermittelt.

$^1$H-NMR (300 MHz, $C_6D_4Cl_2$, 95 °C): $\delta$ = 0,5-0,9 (22,88 H), 0,9-1,4 (63,27 H), 1,4-2,1 (18,91 H), 2,1-2,5 (7,863 H), 2,5-2,8 (1,000 H) ppm.

Der Gewichtsanteil an CO betrug 7,1 Gew.-%.

Die molaren Anteile der Monomere im Produkt betrugen 14,72 mol-% CO, 30,82 mol-% Ethylen, 50,67 mol-% 1-Hexen und 3,79 mol-% IBN.

Der Verzweigungsgrad betrug VG = 112,2 Verzweigungen pro 1000 C-Atome.

Experiment 2

Ausbeute: 3,4 g

Laut GPC (Tetrahydrofuran, kalibriert gegen Polystyrol) wies das Produkt ein zahlenmittleres Molekulargewicht $M_n$ = 992 g/mol und einen Polydispersitätsindex PDI = 1,57 auf.

Per Elementaranalyse wurde ein Stickstoff-Gehalt von 4,49% ermittelt.

$^1$H-NMR (300 MHz, $C_6D_4Cl_2$, 95 °C): $\delta$ = 0,5-0,9 (6,0667 H), 0,9-1,4 (12,3628 H), 1,4-2,1 (4,7751 H), 2,1-2,5 (7,936 H), 2,5-2,8 (1,000 H) ppm.

Der Gewichtsanteil an CO betrug 9,9 Gew.-%.

Die molaren Anteile der Monomere im Produkt betrugen 23,3 mol-% CO, 8,2 mol-% Ethylen, 64,2 mol-% 1-Hexen und 4,3 mol-% IBN.

Der Verzweigungsgrad betrug VG = 121,7 Verzweigungen pro 1000 C-Atome.

Experiment 3

Ausbeute: 3,4 g

Laut GPC (Tetrahydrofuran, kalibriert gegen Polystyrol) wies das Produkt ein zahlenmittleres Molekulargewicht $M_n$ = 1106 g/mol und einen Polydispersitätsindex PDI = 1,62 auf.

Per Elementaranalyse wurde ein Stickstoff-Gehalt von 3,5% ermittelt.

$^1$H-NMR (300 MHz, $C_6D_4Cl_2$, 95 °C): $\delta$ = 0,5-0,9 (131,5882 H), 0,9-1,4 (265,7257 H), 1,4-2,1 (98,8046 H), 2,1-2,5 (41,246 H), 2,5-2,8 (19,246 H) ppm.

Der Gewichtsanteil an CO betrug 9,7 Gew.-%.

Die molaren Anteile der Monomere im Produkt betrugen 23,2 mol-% CO, 6,2 mol-% Ethylen, 67,1 mol-% 1-Hexen und 3,5 mol-% IBN.

Der Verzweigungsgrad betrug VG = 126,7 Verzweigungen pro 1000 C-Atome.

*Vergleich:*

Vergleichsbeispiel 3 (Ethylen-1-Hexen-CO-Terpolymer, erhalten durch radikalische Polymerisation, entsprechend Beispiel 1 aus WO 2011/110535 A2) zeigt eindeutig, dass die in WO 2011/1105535 A2 offenbarten, nach einem radikalischen Polymerisationsverfahren erhaltenen Ethylen-1-Hexen-CO-Terpolymere strukturell grundlegend unterschiedlich sind von den in den erfindungsgemäßen Beispielen 1 und 2 erhaltenen Ethylen-1-Hexen-CO-Terpolymeren. Die in Vergleichsbeispiel 3 erhaltenen Ethylen-1-Hexen-CO-Terpolymere weisen im Gegensatz zu den erfindungsgemäßen Ethylen-1-Hexen-CO-Terpolymeren einen molaren CO-Gehalt > 10 mol-% sowie einen Verzweigungsgrad > 60 Verzweigungen pro 1000 C-Atome auf.

Die Beispiele 1 bis 4 belegen eindeutig, dass nach dem erfindungsgemäßen Verfahren Olefin-CO-Terpolymere erhalten wurden, bei denen das zweite Olefin ein aliphatisch substituiertes Olefin (1-Hexen, Beispiele 1 und 2) oder ein aromatisch substituiertes Olefin (Styrol, Beispiele 3 und 4) ist.

Weiterhin zeigt ein Vergleich der Vergleichsbeispiele 1 und 2 (Ethylen-CO-Copolymere) mit den Beispielen 1 und 2 (Ethylen-1-Hexen-CO-Terpolymere) und den Beispielen 3 und 4 (Ethylen-Styrol-CO-Terpolymere), dass unabhängig von den eingesetzten Reaktionsbedingungen bei der Abwesenheit eines zweiten Olefins generell Polymere erhalten werden, die höhere Schmelzpunkte, bei gleichen Temperaturen höhere Schmelzviskositäten, sowie höhere Molekulargewichte aufweisen, unabhängig davon, ob es sich beim zweiten Olefin um ein aliphatisch substituiertes (1-Hexen) oder ein aromatisch substituiertes Olefin (Styrol) handelt.

Vergleichsbeispiel 3 zeigt, dass durch radikalische Polymerisationsverfahren Olefin-CO-Terpolymere erhalten werden, welche sich strukturell grundlegend von den erfindungsgemäßen Olefin-CO-Terpolymeren unterscheiden.

## Patentansprüche

**1.** Verfahren zur Herstellung von Olefin-CO-Terpolymeren, umfassend die Schritte:

- Bereitstellen eines Reaktors;
- Beaufschlagen des Reaktors mit einem ersten, gasförmigen Olefin und mit CO, so dass im Reaktor ein erster Druck p1 herrscht;
- Reaktion des ersten Olefins mit CO in Gegenwart eines Katalysators im Reaktor;

**dadurch gekennzeichnet, dass**
ein zweites Olefin im Reaktor vorgelegt und/oder während der Reaktion zudosiert wird,
vor der Reaktion im Reaktor entweder kein CO vorliegt oder das Volumenverhältnis von erstem, gasförmigen Olefin zu CO > 60:40 ist und
während der Reaktion das Volumenverhältnis von zudosiertem gasförmigem Olefin zu zudosiertem CO im zeitlichen Mittel > 60:40 ist.

**2.** Verfahren nach Anspruch 1, wobei während der Reaktion zumindest zeitweise gasförmiges Olefin und CO zudosiert werden, wobei das Volumenverhältnis des zudosierten gasförmigen Olefins zu zudosiertem CO hierbei im zeitlichen Mittel > 60:40 ist.

**3.** Verfahren gemäß Anspruch 1 oder 2, wobei während der Reaktion der Druck im Reaktor im Bereich von ≥ 80% von p1 bis ≤ 120% von p1 liegt.

**4.** Verfahren gemäß einem oder mehreren der Ansprüche 1 bis 3, wobei der während der Reaktion auftretende Druckverlust durch Nachführen von gasförmigem Olefin und CO in den Reaktor ausgeglichen wird und wobei das Volumenverhältnis des nachgeführten gasförmigen Olefins zum nachgeführten CO im zeitlichen Mittel > 60:40 beträgt.

**5.** Verfahren gemäß einem oder mehreren der Ansprüche 1 bis 4, wobei der Katalysator Palladium enthält.

**6.** Verfahren gemäß einem oder mehreren der Ansprüche 1 bis 5, wobei vor der Reaktion des ersten Olefins mit CO eine Homopolymerisation des ersten Olefins oder eine Copolymerisation von mehreren Olefinen in Abwesenheit von CO im Reaktor durchgeführt wird.

**7.** Verfahren gemäß einem oder mehreren der Ansprüche 1 bis 6, wobei der Druck p1 ≥ 20 bar bis ≤ 300 bar beträgt.

**8.** Verfahren gemäß einem oder mehreren der Ansprüche 1 bis 7, wobei die Reaktion bei einer Temperatur von ≥ 90 °C bis ≤ 150 °C durchgeführt wird.

**9.** Verfahren gemäß einem oder mehreren der Ansprüche 1 bis 8, wobei der Katalysator oder ein Gemisch der Katalysator-Komponenten bei einer Temperatur von ≥ 90 °C bis ≤ 150 °C in den Reaktor enthaltend erstes und/oder zweites Olefin oder ein Gemisch aus erstem und/oder zweitem Olefin und CO injiziert wird.

**10.** Olefin-CO-Terpolymer, erhältlich durch ein Verfahren gemäß einem oder mehreren der Ansprüche 1 bis 9, **dadurch gekennzeichnet, dass** der Gehalt an in das Terpolymer eingebautem CO ≤ 10mol-%, bezogen auf alle eingebauten Monomere, beträgt und der Verzweigungsgrad < 60 Verzweigungen pro 1000 im Olefin-CO-Terpolymer eingebauten Kohlenstoff-Atome beträgt.

**11.** Olefin-CO-Terpolymer gemäß Anspruch 10 mit einem zahlenmittleren Molekulargewicht $M_n$ von ≤ 15000 g/mol.

**12.** Olefin-CO-Terpolymer gemäß Anspruch 10 oder 11 mit einem Schmelzpunkt von ≤ 115 °C.

**13.** Polyolverbindung, erhältlich durch Reduktion eines Olefin-CO-Terpolymers gemäß einem oder mehreren der Ansprüche 10 bis 12.

**14.** Polyamin- und/oder Polyamin-Polyalkoholverbindung, erhältlich durch reduktive Aminierung eines Olefin-CO-Terpolymers gemäß einem oder mehreren der Ansprüche 10 bis 12.

**15.** Verwendung von Olefin-CO-Terpolymeren gemäß einem oder mehreren der Ansprüche 10 bis 12, von Polyolverbindungen gemäß Anspruch 13 und/oder von Polyamin- und/oder Polyamin-Polyalkoholverbindungen gemäß Anspruch 14 als Polymeradditive und/oder zur Herstellung von Polyurethan- und/oder Polyharnstoffpolymeren.

Europäisches Patentamt
European Patent Office
Office européen des brevets

# EUROPÄISCHER RECHERCHENBERICHT

Nummer der Anmeldung
EP 14 15 8030

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2 495 286 A (BRUBAKER MERLIN M) 24. Januar 1950 (1950-01-24)<br>* Anspruch 1 *<br>* Beispiele 12,13 *<br>* Spalte 15, Zeile 10 - Zeile 75 * | 1-4,6-15 | INV.<br>C08G67/02 |
| X | WO 2011/110535 A2 (BAYER MATERIALSCIENCE AG [DE]; GUERTLER CHRISTOPH [DE]; MUELLER THOMAS) 15. September 2011 (2011-09-15)<br>* Beispiele 1,2 * | 1-4,6-15 | |
| X | WO 02/06416 A2 (EXXONMOBIL RES & ENG CO [US]) 24. Januar 2002 (2002-01-24)<br>* Beispiele 2,7,8 * | 1-4,6-15 | |
| A | EP 0 485 035 A2 (SHELL INT RESEARCH [NL]) 13. Mai 1992 (1992-05-13)<br>* Anspruch 1; Beispiel 1 * | 1-15 | |
| A | SESTO B ET AL: "ENANTIOSELECTIVE ALTERNATING TERPOLYMERIZATION OF PROPENE AND ETHENE WITH CARBON MONOXIDE", MACROMOLECULAR CHEMISTRY AND PHYSICS, WILEY-VCH VERLAG, WEINHEIM, DE, Bd. 202, Nr. 10, 27. Juli 2001 (2001-07-27), Seiten 2059-2064, XP001071318, ISSN: 1022-1352, DOI: 10.1002/1521-3935(20010601)202:10<2059::AID-MACP2059>3.0.CO;2-K<br>* Tabelle 1 * | 1-15 | RECHERCHIERTE SACHGEBIETE (IPC)<br>C08G |
| A | JP H11 35676 A (KURARAY CO) 9. Februar 1999 (1999-02-09)<br>* Zusammenfassung * | 1-15 | |

Der vorliegende Recherchenbericht wurde für alle Patentansprüche erstellt

1

| Recherchenort | Abschlußdatum der Recherche | Prüfer |
|---|---|---|
| Den Haag | 13. August 2014 | Kiebooms, Rafaël |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 14 15 8030

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-08-2014

| Im Recherchenbericht angeführtes Patentdokument | Datum der Veröffentlichung | Mitglied(er) der Patentfamilie | Datum der Veröffentlichung |
|---|---|---|---|
| US 2495286 A | 24-01-1950 | KEINE | |
| WO 2011110535 A2 | 15-09-2011 | CN 102803343 A | 28-11-2012 |
| | | EP 2545101 A2 | 16-01-2013 |
| | | JP 2013522381 A | 13-06-2013 |
| | | US 2013066112 A1 | 14-03-2013 |
| | | WO 2011110535 A2 | 15-09-2011 |
| WO 0206416 A2 | 24-01-2002 | AR 029845 A1 | 16-07-2003 |
| | | AU 7307601 A | 30-01-2002 |
| | | CA 2416162 A1 | 24-01-2002 |
| | | EP 1301575 A2 | 16-04-2003 |
| | | TW 591091 B | 11-06-2004 |
| | | US 2002028752 A1 | 07-03-2002 |
| | | US 2003166479 A1 | 04-09-2003 |
| | | WO 0206416 A2 | 24-01-2002 |
| EP 0485035 A2 | 13-05-1992 | AU 646101 B2 | 10-02-1994 |
| | | AU 8708091 A | 14-05-1992 |
| | | CA 2055016 A1 | 09-05-1992 |
| | | CN 1061417 A | 27-05-1992 |
| | | EP 0485035 A2 | 13-05-1992 |
| | | JP 3290680 B2 | 10-06-2002 |
| | | JP H04272925 A | 29-09-1992 |
| | | SG 76459 A1 | 21-11-2000 |
| | | US 5169927 A | 08-12-1992 |
| | | ZA 9108803 A | 29-07-1992 |
| JP H1135676 A | 09-02-1999 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0213671 A
- EP 0632084 A
- US 2495286 A
- GB 1522942 A
- US 20080242895 A
- JP 1149828 A
- JP 11035676 A
- JP 11035677 A
- EP 0791615 A1
- JP 2232228 A
- EP 830932 A2
- EP 0735081 A2
- JP 10081745 A
- JP 9235370 A
- WO 2011110535 A2
- WO 20111105535 A2